# EUROPEAN PATENT SPECIFICATION

(11) **EP 3 627 793 B1**
(45) Date of publication and mention of the grant of the patent: **29.09.2021**
(21) Application number: 18820052.1
(22) Date of filing: 23.05.2018
(51) Int. Cl.: H04L 29/06, H04W 12/00, H04W 76/10

(54) **SESSION PROCESSING METHOD AND DEVICE**
SITZUNGSVERARBEITUNGSVERFAHREN UND -VORRICHTUNG
PROCÉDÉ ET DISPOSITIF DE TRAITEMENT DE SESSION

(30) Priority: 20.06.2017 CN 201710471926
(43) Date of publication of application: 25.03.2020
(73) Proprietor: Huawei Technologies Co., Ltd., Longgang District Shenzhen, Guangdong 518129 (CN)
(72) Inventor: YING, Jiangwei, Shenzhen Guangdong 518129 (CN); TAN, Shiyong, Shenzhen Guangdong 518129 (CN); YANG, Yanmei, Shenzhen Guangdong 518129 (CN)
(74) Representative: Maiwald Patent- und Rechtsanwaltsgesellschaft mbH
(86) International application number: PCT/CN2018/088067
(87) International publication number: WO 2018/233436

(56) References cited:
- EP-A1- 3 644 647
- CN-A- 101 277 297
- CN-A- 101 442 523
- CN-A- 106 210 042
- NOKIA: "EAP based Secondary authentication with an external Authenticator", 3GPP DRAFT; S3_171387_WAS_749_SECONDARY AUTHENTICATION BY AN EXTERNAL DN AUTHENTICATOR, 3RD GENERATION PARTNERSHIP PROJECT (3GPP), MOBILE COMPETENCE CENTRE ; 650, ROUTE DES LUCIOLES ; F-06921 SOPHIA-A , vol. SA WG3, no. Ljubljana, Slovenia; 20170515 - 20170519 14 May 2017 (2017-05-14), XP051282924, Retrieved from the Internet: URL:http://www.3gpp.org/ftp/Meetings_3GPP_ SYNC/SA3/Docs/ [retrieved on 2017-05-14]
- "3rd Generation Partnership Project; Technical Specification Group Services and System Aspects; System Architecture for the 5G System; Stage 2 (Release 15)", 3GPP STANDARD ; TECHNICAL SPECIFICATION ; 3GPP TS 23.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V0.5.0, 1 June 2017 (2017-06-01), pages 1-145, XP051298314,
- Nokia: "Secondary authentication by an external DN-AAA server", 3GPP TSG-RAN WG3 (security) meeting #87, vol. SA WG3, 19 May 2017 (2017-05-19), pages 1-5, XP051289686,
- TSCHOFENIG D KROESELBERG NOKIA SIEMENS NETWORKS A PASHALIDIS NEC Y OHBA TOSHIBA F BERSANI FRANCE TELECOM H: "The Extensible Authentication Protocol-Internet Key Exchange Protocol version 2 (EAP-IKEv2) Method; rfc5106.txt", THE EXTENSIBLE AUTHENTICATION PROTOCOL-INTERNET KEY EXCHANGE PROTOCOL VERSION 2 (EAP-IKEV2) METHOD; RFC5106.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 February 2008 (2008-02-01), XP015055176,

## Description

### TECHNICAL FIELD

This application relates to communications technologies, and in particular, to a session processing method and device.

### BACKGROUND

With continuous development of communications technologies, research and standardization for a 5th generation (5th-generation, 5G) mobile communications technology have been launched. In a 5G network, a data network (data network, DN) may include a plurality of different applications. When a terminal device needs to access the DN, the terminal device initiates a protocol data unit session establishment (protocol data unit session establishment procedure) procedure of the DN, to establish a data transmission channel from the terminal device to the DN.

Nokia, "EAP based secondary authentication with an external authenticator", S3-171387, issued on 14-05-2017, 3GPP TSG SA WG3 (Security) Meeting #87, 15-19 May, 2017, Ljubljana, Slovenia, is a solution that describes a mechanism for EAP authentication between a User Equipment, UE, and an external data network using an external Authnticator and AAA server.

3GPP TS 23.501 V0.5 (2017-05) "3rd Generation Partnership Project; Technical Specification Group Services and System Aspects; System Architecture for the 5G System"; Stage 2 (Release 15), defines the Stage 2 system architechture for the 5G System.

RFC 5106 "The Extensible Authentication Protocol-Internet Key Exchange Protocol version 2 (EAP-IKEv2) Method", by H. Tschofenig at al., published in February 2008 by IETF, specifies EAP-IKEv2 that provides mutual authentication and session key establishment between an EAP peer and an EAP server.

However, network information security appears to be especially important when security risks and information privacy encounter more problems. In the prior art, during a PDU session establishment procedure, no authentication is performed between a terminal device and a third-party authentication entity that is in a DN. Consequently, an unauthorized user accesses the DN netwrk, affecting security of the DN.

### SUMMARY

The present invention is defined by the subject-matter of the independent claims. Further details are defined in the dependent claims.

Embodiments of this application provide a session processing method and device, to improve security of a DN and save network resources.

In a first aspect, there is provided a session processing methiod as defined in appended claim 1.

In a second aspect, there is provided a session management function as defined in appended claim 5.

In a third aspect, there is provided a system as defined in appended claim 6.

In a fourth aspect, there is provided a computer-readable storage medium as defined in appended claim 7.

According to a first example, a session processing method is provided. The method includes: receiving, by a session management function SMF entity, a protocol data unit PDU session establishment request, where the PDU session establishment request is used to request to establish a PDU session for a terminal device; determining, by the SMF entity based on reference information, to authenticate the PDU session; and sending, by the SMF entity, an authentication request to a third-party authentication entity by using a network exposure function NEF entity. A control-plane-based PDU session authentication manner is provided, so that the terminal device and the third-party authentication entity that is in a DN may be required to perform mutual authentication, and unauthorized user access may be rejected, thereby improving security of the DN, and reducing network resources.

With reference to the first example, in a first implementation of the first example, the reference information includes at least one of the following: a data network name DNN, session management-network slice selection assistance information S-NSSAI, or an application identifier.

With reference to the first example or the first implementation of the first example, in a second implementation of the first example, the PDU session establishment request is carried in first signaling; and
the determining, by the SMF entity based on reference information, to authenticate the PDU session includes:
when the first signaling further includes a DNN corresponding to the PDU session, and the reference information includes the DNN corresponding to the PDU session, determining, by the SMF entity, to authenticate the PDU session; or
when the first signaling further includes an application identifier corresponding to the PDU session, and the reference information includes the application identifier corresponding to the PDU session, determining, by the SMF entity, to authenticate the PDU session; or
when the first signaling further includes a DNN and an application identifier that correspond to the PDU session, and the reference information includes the DNN and the application identifier that correspond to the PDU session, determining, by the SMF entity, to authenticate the PDU session; or
when the first signaling further includes a DNN and S-NSSAI that correspond to the PDU session, and the reference information includes the DNN and the S-NSSAI that correspond to the PDU session, determining, by the SMF entity, to authenticate the PDU session.

With reference to the first example or the second implementation of the first example, in a third implementation of the first example, the sending, by the SMF entity, an authentication request to a third-party authentication entity by using a NEF entity includes:
obtaining, by the SMF entity, an identifier of the third-party authentication entity based on a correspondence and the first signaling; and
sending, by the SMF entity by using the NEF entity, the authentication request to the third-party authentication entity indicated by the identifier of the third-party authentication entity.

With reference to the first example or the third implementation of the first example, in a fourth implementation of the first example, the obtaining, by the SMF entity, an identifier of the third-party authentication entity based on a correspondence and the first signaling includes:
when the first signaling includes the DNN corresponding to the PDU session, obtaining, by the SMF entity, the identifier of the third-party authentication entity based on the correspondence and the DNN corresponding to the PDU session, where the correspondence is a correspondence between the DNN and the identifier of the third-party authentication entity; or
when the first signaling includes the application identifier corresponding to the PDU session, obtaining, by the SMF entity, the identifier of the third-party authentication entity based on the correspondence and the application identifier corresponding to the PDU session, where the correspondence is a correspondence between the application identifier and the identifier of the third-party authentication entity; or
when the first signaling includes the DNN and the application identifier that correspond to the PDU session, obtaining, by the SMF entity, the identifier of the third-party authentication entity based on the correspondence and the DNN and the application identifier that correspond to the PDU session, where the correspondence is a correspondence among the DNN, the application identifier, and the identifier of the third-party authentication entity; or
when the first signaling includes the DNN and the S-NSSAI that correspond to the PDU session, obtaining, by the SMF entity, the identifier of the third-party authentication entity based on the correspondence and the DNN and the S-NSSAI that correspond to the PDU session, where the correspondence is a correspondence among the DNN, the S-NSSAI, and the identifier of the third-party authentication entity.

With reference to the first example, the first implementation of the first example, or the second implementation of the first example, in a fifth implementation of the first example, the PDU session establishment request is carried in the first signaling; and
the sending, by the SMF entity, an authentication request to a third-party authentication entity by using a NEF entity includes:
when the first signaling further includes a user identifier, obtaining, by the SMF entity, an identifier of the third-party authentication entity based on the user identifier; and
sending, by the SMF entity by using the NEF entity, the authentication request to the third-party authentication entity indicated by the identifier of the third-party authentication entity.

With reference to any one of the first example or the implementations of the first example, in a sixth implementation of the first example, after the sending, by the SMF entity, an authentication request to a third-party authentication entity by using a NEF entity, the method further includes:
receiving, by the SMF entity, an authentication message sent by the third-party authentication entity by using the NEF entity, where the authentication message is used to request the terminal device to send an authentication parameter;
sending, by the SMF entity, the authentication message to the terminal device;
receiving, by the SMF entity, the authentication parameter, and sending the authentication parameter to the third-party authentication entity by using the NEF entity;
receiving, by the SMF entity, an authentication result sent by the third-party authentication entity by using the NEF entity; and
when the authentication result indicates that the authentication between the terminal device and the third-party authentication entity succeeds, continuing, by the SMF entity, performing a PDU session establishment procedure.
With reference to any one of the first example or the implementations of the first example, in a seventh implementation of the first example, the PDU session establishment request is carried in the first signaling, and the first signaling further includes an authentication parameter; and
after the sending, by the SMF entity, an authentication request to a third-party authentication entity by using a NEF entity, the method further includes:
   receiving, by the SMF entity, an authentication result sent by the third-party authentication entity by using the NEF entity; and
   when the authentication result indicates that the authentication between the terminal device and the third-party authentication entity succeeds, continuing, by the SMF entity, performing a PDU session establishment procedure.

With reference to the first example, the sixth implementation of the first example, or the seventh implementation of the first example, in an eighth implementation of the first example, the authentication result is carried in an authentication feedback message, and the authentication feedback message further includes a key generation parameter; and
the method further includes:
sending, by the SMF entity, the key generation parameter to the terminal device, where the key generation parameter is used to establish application level security between the terminal device and the third-party authentication entity.

With reference to the first example, the sixth implementation of the first example, the seventh implementation of the first example, or the eighth implementation of the first example, in a ninth implementation of the first example, the authentication parameter includes at least one of the following:
a certificate of the terminal device, a user name or password of the terminal device, an identity verification parameter, or a security key parameter, where
the identity verification parameter is used by the third-party authentication entity to verify an identity of the terminal device, and the security key parameter is used to generate a shared key between the terminal device and the third-party authentication entity.

With reference to any one of the first example or the implementations of the first example, in a tenth implementation of the first example, the authentication request is carried in second signaling, and the second signaling further includes a first parameter, where
the first parameter includes at least one of the following: the DNN corresponding to the PDU session, the S-NSSAI corresponding to the PDU session, the application identifier corresponding to the PDU session, or the identifier of the third-party authentication entity.

With reference to any one of the first example or the implementations of the first example, in an eleventh implementation of the first example, before the determining, by the SMF entity based on reference information, to authenticate the PDU session, the method further includes:
configuring, by the SMF entity, the reference information on the SMF entity; or
obtaining, by the SMF entity, the reference information from a unified data management UDM entity, a policy control function PCF entity, or the NEF entity.

According to a second example, a session processing method is provided. The method includes: determining, by a terminal device based on reference information, to authenticate a protocol data unit PDU session; and sending, by the terminal device, a signaling message, where the signaling message includes a PDU session establishment request and a user identifier, and the PDU session establishment request is used to request to establish the PDU session for the terminal device. A control-plane-based PDU session authentication manner is provided, so that the terminal device and a third-party authentication entity that is in a DN may be required to perform mutual authentication, and unauthorized user access may be rejected, thereby improving security of the DN, and reducing network resources.

With reference to the second example, in a first implementation of the second example, the reference information includes at least one of the following: a data network name DNN, session management-network slice selection assistance information S-NSSAI, or an application identifier.

With reference to the second example or the first implementation of the second example, in a second implementation of the first example, the determining, by a terminal device based on reference information, to authenticate a PDU session includes:
when the reference information includes a DNN corresponding to the PDU session, determining, by the terminal device, to authenticate the PDU session; or
when the reference information includes an application identifier corresponding to the PDU session, determining, by the terminal device, to authenticate the PDU session; or
when the reference information includes a DNN and an application identifier that correspond to the PDU session, determining, by the terminal device, to authenticate the PDU session; or
when the reference information includes a DNN and S-NSSAI that correspond to the PDU session, determining, by the terminal device, to authenticate the PDU session.

With reference to any one of the second example or the implementations of the second example, in a third implementation of the second example, the signaling message further includes any one of the following: the application identifier corresponding to the PDU session or an authentication parameter.

With reference to any one of the second example or the implementations of the second example, in a fourth implementation of the second example, after the terminal device sends the signaling message, the method further includes:
receiving, by the terminal device, a key generation parameter sent by a session management function SMF entity, where the key generation parameter is used to establish application level security of the terminal device.

According to a third example, a session processing method is provided. The method includes: receiving, by a network exposure function NEF entity, an authentication request and a first parameter from a session management function SMF entity, where the authentication request is used to request to authenticate a protocol data unit PDU session; and sending, by the NEF entity, the authentication request to a third-party authentication entity based on the first parameter. A control-plane-based PDU session authentication manner is provided, so that a terminal device and the third-party authentication entity that is in a DN may be required to perform mutual authentication, and unauthorized user access may be rejected, thereby improving security of the DN, and reducing network resources.

With reference to the third example, in a first implementation of the third example, the first parameter includes at least one of the following: a data network name DNN corresponding to the PDU session, session management-network slice selection assistance information S-NSSAI corresponding to the PDU session, an application identifier corresponding to the PDU session, or an identifier of the third-party authentication entity.

With reference to the third example or the first implementation of the third example, in a second implementation of the third example, the sending, by the NEF entity, the authentication request to a third-party authentication entity based on the first parameter includes:
obtaining, by the NEF entity, the identifier of the third-party authentication entity based on the first parameter; and
sending, by the NEF entity, the authentication request to the third-party authentication entity indicated by the identifier of the third-party authentication entity.

With reference to the third example or the second implementation of the third example, in a third implementation of the third example, the obtaining, by the NEF entity, the identifier of the third-party authentication entity based on the first parameter includes:
when the first parameter includes the DNN corresponding to the PDU session, obtaining, by the NEF entity, the identifier of the third-party authentication entity based on a first correspondence and the first parameter, where the first correspondence is a correspondence between the DNN and the identifier of the third-party authentication entity; or
when the first parameter includes the application identifier corresponding to the PDU session, obtaining, by the NEF entity, the identifier of the third-party authentication entity based on a second correspondence and the first parameter, where the second correspondence is a correspondence between the application identifier and the identifier of the third-party authentication entity; or
when the first parameter includes the DNN and the application identifier that correspond to the PDU session, obtaining, by the NEF entity, the identifier of the third-party authentication entity based on a third correspondence and the first parameter, where the third correspondence is a correspondence among the DNN, the application identifier, and the identifier of the third-party authentication entity; or
when the first parameter includes the DNN and the S-NSSAI that correspond to the PDU session, obtaining, by the NEF entity, the identifier of the third-party authentication entity based on a fifth correspondence and the first parameter, where the fifth correspondence is a correspondence among the DNN, the S-NSSAI, and the identifier of the third-party authentication entity.

With reference to the third example, the first implementation of the third example, the second implementation of the third example, or the third implementation of the third example, in a fourth implementation of the third example, before the sending, by the NEF entity, the authentication request to a third-party authentication entity based on the first parameter, the method further includes:
determining, by the NEF entity based on reference information, to authenticate the PDU session, where the reference information includes at least one of the following: a DNN, S-NSSAI, or an application identifier.

With reference to the third example or the fourth implementation of the third example, in a fifth implementation of the third example, the determining, by the NEF entity based on reference information, to authenticate the PDU session includes:
when the reference information includes the DNN in the first parameter, determining, by the NEF entity, to authenticate the PDU session; or
when the reference information includes the application identifier in the first parameter, determining, by the NEF entity, to authenticate the PDU session; or
when the reference information includes the DNN and the application identifier that are in the first parameter, determining, by the NEF entity, to authenticate the PDU session; or
when the reference information includes the DNN and the S-NSSAI that are in the first parameter, determining, by the NEF entity, to authenticate the PDU session.

With reference to any one of the third example or the implementations of the third example, in a sixth implementation of the third example, the authentication request and the first parameter are carried in first signaling, and the first signaling further includes an identifier of the SMF entity; and
the sending, by the NEF entity, the authentication request to a third-party authentication entity includes:
sending, by the NEF entity, the authentication request and the identifier of the SMF entity to the third-party authentication entity; or
converting, by the NEF entity, the identifier of the SMF entity into an external identifier of the SMF entity, and sending the authentication request and the external identifier to the third-party authentication entity.

With reference to any one of the third example or the implementations of the third example, in a seventh implementation of the third example, before the receiving, by a NEF entity, an authentication request and a first parameter from an SMF entity, the method further includes:
receiving, by the NEF entity, a service registration request sent by the third-party authentication entity, where the service registration request is used to request the NEF entity to complete a service registration procedure with the third-party authentication entity; and
when the service registration procedure succeeds, generating, by the NEF entity, the reference information, and sending the reference information to the SMF entity or a policy control function PCF entity; or when the service registration procedure succeeds, sending, by the NEF entity, a first message to a PCF entity, where the first message is used by the PCF entity to generate the reference information and/or a dynamic policy control and charging PCC policy.

With reference to any one of the third example or the implementations of the third example, in an eighth implementation of the third example, before the sending, by the NEF entity, the authentication request to a third-party authentication entity based on the first parameter, the method further includes:
establishing, by the NEF entity, a binding relationship between the SMF entity and the third-party authentication entity.

According to a fourth example, a session processing apparatus is provided. The apparatus includes: a first receiving unit, configured to receive a protocol data unit PDU session establishment request, where the PDU session establishment request is used to request to establish a PDU session for a terminal device; a determining unit, configured to determine, based on reference information, to authenticate the PDU session; and a first sending unit, configured to send an authentication request to a third-party authentication entity by using a network exposure function NEF entity. A control-plane-based PDU session authentication manner is provided, so that the terminal device and the third-party authentication entity that is in a DN may be required to perform mutual authentication, and unauthorized user access may be rejected, thereby improving security of the DN, and reducing network resources.

With reference to the fourth example, in a first implementation of the fourth example, the reference information includes at least one of the following: a data network name DNN, session management-network slice selection assistance information S-NSSAI, or an application identifier.

With reference to the fourth example or the first implementation of the fourth example, in a second implementation of the fourth example, the PDU session establishment request is carried in first signaling; and
the determining unit is specifically configured to:
when the first signaling further includes a DNN corresponding to the PDU session, and the reference information includes the DNN corresponding to the PDU session, determine to authenticate the PDU session; or
when the first signaling further includes an application identifier corresponding to the PDU session, and the reference information includes the application identifier corresponding to the PDU session, determine to authenticate the PDU session; or
when the first signaling further includes a DNN and an application identifier that correspond to the PDU session, and the reference information includes the DNN and the application identifier that correspond to the PDU session, determine to authenticate the PDU session; or
when the first signaling further includes a DNN and S-NSSAI that correspond to the PDU session, and the reference information includes the DNN and the S-NSSAI that correspond to the PDU session, determine to authenticate the PDU session.

With reference to the fourth example or the second implementation of the fourth example, in a third implementation of the fourth example, the first sending unit includes:
an obtaining subunit, configured to obtain an identifier of the third-party authentication entity based on a correspondence and the first signaling; and
a sending subunit, configured to send, by using the NEF entity, the authentication request to the third-party authentication entity indicated by the identifier of the third-party authentication entity.

With reference to the fourth example or the third implementation of the fourth example, in a fourth implementation of the fourth example, the obtaining subunit is specifically configured to:
when the first signaling includes the DNN corresponding to the PDU session, obtain the identifier of the third-party authentication entity based on the correspondence and the DNN corresponding to the PDU session, where the correspondence is a correspondence between the DNN and the identifier of the third-party authentication entity; or
when the first signaling includes the application identifier corresponding to the PDU session, obtain the identifier of the third-party authentication entity based on the correspondence and the application identifier corresponding to the PDU session, where the correspondence is a correspondence between the application identifier and the identifier of the third-party authentication entity; or
when the first signaling includes the DNN and the application identifier that correspond to the PDU session, obtain the identifier of the third-party authentication entity based on the correspondence and the DNN and the application identifier that correspond to the PDU session, where the correspondence is a correspondence among the DNN, the application identifier, and the identifier of the third-party authentication entity; or
when the first signaling includes the DNN and the S-NSSAI that correspond to the PDU session, obtain the identifier of the third-party authentication entity based on the correspondence and the DNN and the S-NSSAI that correspond to the PDU session, where the correspondence is a correspondence among the DNN, the S-NSSAI, and the identifier of the third-party authentication entity.

With reference to any one of the fourth example or the foregoing implementations of the fourth example, in a fifth implementation of the fourth example, the PDU session establishment request is carried in the first signaling; and
the first sending unit is specifically configured to:
when the first signaling further includes a user identifier, obtain the identifier of the third-party authentication entity based on the user identifier; and
send, by using the NEF entity, the authentication request to the third-party authentication entity indicated by the identifier of the third-party authentication entity.

With reference to any one of the fourth example or the foregoing implementations of the fourth example, in a sixth implementation of the fourth example, the apparatus further includes:
a second receiving unit, configured to: after the first sending unit sends the authentication request to the third-party authentication entity by using the NEF entity, receive an authentication message sent by the third-party authentication entity by using the NEF entity, where the authentication message is used to request the terminal device to send an authentication parameter;
a second sending unit, configured to send the authentication message to the terminal device;
a third receiving unit, configured to: receive the authentication parameter, and send the authentication parameter to the third-party authentication entity by using the NEF entity;
a fourth receiving unit, configured to receive an authentication result sent by the third-party authentication entity by using the NEF entity; and
a first confirming unit, configured to: when the authentication result indicates that the authentication between the terminal device and the third-party authentication entity succeeds, continue performing a PDU session establishment procedure.

With reference to any one of the fourth example or the foregoing implementations of the fourth example, in a seventh implementation of the fourth example, the PDU session establishment request is carried in the first signaling, and the first signaling further includes an authentication parameter; and
the apparatus further includes:
a fifth receiving unit, configured to: after the first sending unit sends the authentication request to the third-party authentication entity by using the NEF entity, receive an authentication result sent by the third-party authentication entity by using the NEF entity; and
a second confirming unit, configured to: when the authentication result indicates that the authentication between the terminal device and the third-party authentication entity succeeds, continue performing the PDU session establishment procedure.

With reference to the fourth example, the sixth implementation of the fourth example, or the seventh implementation of the fourth example, in an eighth implementation of the fourth example, the authentication result is carried in an authentication feedback message, and the authentication feedback message further includes a key generation parameter; and
the apparatus further includes:
a third sending unit, configured to send the key generation parameter to the terminal device, where the key generation parameter is used to establish application level security between the terminal device and the third-party authentication entity.

With reference to the fourth example, the sixth implementation of the fourth example, the seventh implementation of the fourth example, or the eighth implementation of the fourth example, in a ninth implementation of the fourth example, the authentication parameter includes at least one of the following:
a certificate of the terminal device, a user name or password of the terminal device, an identity verification parameter, or a security key parameter, where
the identity verification parameter is used by the third-party authentication entity to verify an identity of the terminal device, and the security key parameter is used to generate a shared key between the terminal device and the third-party authentication entity.

With reference to any one of the fourth example or the implementations of the fourth example, in a tenth implementation of the fourth example, the authentication request is carried in second signaling, and the second signaling further includes a first parameter, where
the first parameter includes at least one of the following: the DNN corresponding to the PDU session, the S-NSSAI corresponding to the PDU session, the application identifier corresponding to the PDU session, or the identifier of the third-party authentication entity.

With reference to any one of the fourth example or the implementations of the fourth example, in an eleventh implementation of the fourth example, the apparatus further includes:
a configuration unit, configured to: before the determining unit determines, based on the reference information, to authenticate the PDU session, configure the reference information; or
the apparatus further includes:
   an obtaining unit, configured to: before the determining unit determines, based on the reference information, to authenticate the PDU session, obtain the reference information from a unified data management UDM entity, a policy control function PCF entity, or the NEF entity.

According to a fifth example, a session processing apparatus is provided. The apparatus includes: a determining unit, configured to determine, based on reference information, to authenticate a protocol data unit PDU session; and a sending unit, configured to send a signaling message, where the signaling message includes a PDU session establishment request and a user identifier, and the PDU session establishment request is used to request to establish the PDU session for a terminal device. A control-plane-based PDU session authentication manner is provided, so that the terminal device and a third-party authentication entity that is in a DN may be required to perform mutual authentication, and unauthorized user access may be rejected, thereby improving security of the DN, and reducing network resources.

With reference to the fifth example, in a first implementation of the fifth example, the reference information includes at least one of the following: a data network name DNN, session management-network slice selection assistance information S-NSSAI, or an application identifier.

With reference to the fifth example or the first implementation of the fifth example, in a second implementation of the fifth example, the determining unit is specifically configured to:
when the reference information includes a DNN corresponding to the PDU session, determine to authenticate the PDU session; or
when the reference information includes an application identifier corresponding to the PDU session, determine to authenticate the PDU session; or
when the reference information includes a DNN and an application identifier that correspond to the PDU session, determine to authenticate the PDU session; or
when the reference information includes a DNN and S-NSSAI that correspond to the PDU session, determine to authenticate the PDU session.

With reference to any one of the fifth example or the foregoing implementations of the fifth example, in a third implementation of the fifth example, the signaling message further includes any one of the following: the application identifier corresponding to the PDU session or an authentication parameter.

With reference to any one of the fifth example or the foregoing implementations of the fifth example, in a fourth implementation of the fifth example, the apparatus further includes:
a receiving unit, configured to: after the sending unit sends the first signaling, receive a key generation parameter sent by a session management function SMF entity, where the key generation parameter is used to establish application level security of the terminal device.

According to a sixth example, a session processing apparatus is provided. The apparatus includes: a first receiving unit, configured to receive an authentication request and a first parameter from a session management function SMF entity, where the authentication request is used to request to authenticate a protocol data unit PDU session; and a first sending unit, configured to send the authentication request to a third-party authentication entity based on the first parameter. A control-plane-based PDU session authentication manner is provided, so that a terminal device and the third-party authentication entity that is in a DN may be required to perform mutual authentication, and unauthorized user access may be rejected, thereby improving security of the DN, and reducing network resources.

With reference to the sixth example, in a first implementation of the sixth example, the first parameter includes at least one of the following: a data network name DNN corresponding to the PDU session, session management-network slice selection assistance information S-NSSAI corresponding to the PDU session, an application identifier corresponding to the PDU session, or an identifier of the third-party authentication entity.

With reference to the sixth example or the first implementation of the sixth example, in a second implementation of the sixth example, the first sending unit includes:
an obtaining subunit, configured to obtain the identifier of the third-party authentication entity based on the first parameter; and
a sending subunit, configured to send the authentication request to the third-party authentication entity indicated by the identifier of the third-party authentication entity.

With reference to the sixth example or the second implementation of the sixth example, in a third implementation of the sixth example, the obtaining subunit is specifically configured to:
when the first parameter includes the DNN corresponding to the PDU session, obtain the identifier of the third-party authentication entity based on a first correspondence and the first parameter, where the first correspondence is a correspondence between the DNN and the identifier of the third-party authentication entity; or
when the first parameter includes the application identifier corresponding to the PDU session, obtain the identifier of the third-party authentication entity based on a second correspondence and the first parameter, where the second correspondence is a correspondence between the application identifier and the identifier of the third-party authentication entity; or
when the first parameter includes the DNN and the application identifier that correspond to the PDU session, obtain the identifier of the third-party authentication entity based on a third correspondence and the first parameter, where the third correspondence is a correspondence among the DNN, the application identifier, and the identifier of the third-party authentication entity; or
when the first parameter includes the DNN and the S-NSSAI that correspond to the PDU session, obtain the identifier of the third-party authentication entity based on a fifth correspondence and the first parameter, where the fifth correspondence is a correspondence among the DNN, the S-NSSAI, and the identifier of the third-party authentication entity.

With reference to any one of the sixth example or the foregoing implementations of the sixth example, in a fourth implementation of the sixth example, the apparatus further includes:
a determining unit, configured to: before the first sending unit sends the authentication request to the third-party authentication entity based on the first parameter, determine, based on reference information, to authenticate the PDU session, where the reference information includes at least one of the following: a DNN, S-NSSAI, or an application identifier.

With reference to the sixth example or the fourth implementation of the sixth example, in a fifth implementation of the sixth example, the determining unit is specifically configured to:
when the reference information includes the DNN in the first parameter, determine to authenticate the PDU session; or
when the reference information includes the application identifier in the first parameter, determine to authenticate the PDU session; or
when the reference information includes the DNN and the application identifier that are in the first parameter, determine to authenticate the PDU session; or
when the reference information includes the DNN and the S-NSSAI that are in the first parameter, determine to authenticate the PDU session.

With reference to any one of the sixth example or the foregoing implementations of the sixth example, in a sixth implementation of the sixth example, the authentication request and the first parameter are carried in first signaling, and the first signaling further includes an identifier of the SMF entity; and
the first sending unit is specifically configured to:
send the authentication request and the identifier of the SMF entity to the third-party authentication entity; or
convert the identifier of the SMF entity into an external identifier of the SMF entity, and send the authentication request and the external identifier to the third-party authentication entity.

With reference to any one of the sixth example or the foregoing implementations of the sixth example, in a seventh implementation of the sixth example, the apparatus further includes:
a second receiving unit, configured to: before the first receiving unit receives the authentication request and the first parameter from the SMF entity, receive a service registration request sent by the third-party authentication entity, where the service registration request is used to request the NEF entity to complete a service registration procedure with the third-party authentication entity; and
a second sending unit, configured to: when the service registration procedure succeeds, generate the reference information, and send the reference information to the SMF entity or a policy control function PCF entity; or when the service registration procedure succeeds, send a first message to a PCF entity, where the first message is used by the PCF entity to generate the reference information and/or a dynamic policy control and charging PCC policy.

With reference to any one of the sixth example or the foregoing implementations of the sixth example, in an eighth implementation of the sixth example, the apparatus further includes:
an establishment unit, configured to: before the first sending unit sends the authentication request to the third-party authentication entity based on the first parameter, establish a binding relationship between the SMF entity and the third-party authentication entity.

According to a seventh example, an SMF entity is provided. The SMF entity includes a unit or means (means) configured to perform steps of any method according to the first example.

According to an eighth example, an SMF entity is provided. The SMF entity includes a processor and a memory. The memory is configured to store a program, and the processor invokes the program stored in the memory to perform any method according to the first example.

According to a ninth example, an SMF entity is provided. The SMF entity includes at least one processing element or chip configured to perform any method according to the first example.

According to a tenth example, a program is provided. When the program is executed by a processor, the program is used to perform any method according to the first example.

According to an eleventh example, a computer-readable storage medium is provided. The computer-readable storage medium includes the program according to the tenth example.

According to a twelfth example, a terminal device is provided. The terminal device includes a unit or means (means) configured to perform steps of any method according to the second example.

According to a thirteenth example, a terminal device is provided. The terminal device includes a processor and a memory. The memory is configured to store a program, and the processor invokes the program stored in the memory to perform any method according to the second example.

According to a fourteenth example, a terminal device is provided. The terminal device includes at least one processing element or chip configured to perform any method according to the second example.

According to a fifteenth example, a program is provided. When the program is executed by a processor, the program is used to perform any method according to the second example.

According to a sixteenth example, a computer-readable storage medium is provided. The computer-readable storage medium includes the program according to the fifteenth example.

According to a seventeenth example, a NEF entity is provided. The NEF entity includes a unit or means (means) configured to perform steps of any method according to the third example.

According to an eighteenth example, a NEF entity is provided. The NEF entity includes a processor and a memory. The memory is configured to store a program, and the processor invokes the program stored in the memory to perform any method according to the third example.

According to a nineteenth example, a NEF entity is provided. The NEF entity includes at least one processing element or chip configured to perform any method according to the third example.

According to a twentieth example, a program is provided. When the program is executed by a processor, the program is used to perform any method according to the third example.

According to a twenty-first example, a computer-readable storage medium is provided. The computer-readable storage medium includes the program according to the twentieth example.

### BRIEF DESCRIPTION OF DRAWINGS

To describe a technical solution in the embodiments of this application more clearly, the following briefly describes the accompanying drawings required for describing the embodiments. Apparently, the accompanying drawings in the following description show some embodiments of this application, and a person of ordinary skill in the art may derive other drawings from these accompanying drawings without creative efforts.
FIG. 1 is a structural diagram of a network;
FIG. 2 is a flowchart of a session processing method according to an embodiment of this application;
FIG. 3 is a flowchart of another session processing method according to an embodiment of this application;
FIG. 4 is a flowchart of still another session processing method according to an embodiment of this application;
FIG. 5A and FIG. 5B are a signaling diagram of yet another session processing method according to an embodiment of this application;
FIG. 6A and FIG. 6B are a signaling diagram of still yet another session processing method according to an embodiment of this application;
FIG. 7A and FIG. 7B are a signaling diagram of a further session processing method according to an embodiment of this application;
FIG. 8A and FIG. 8B are a signaling diagram of a still further session processing method according to an embodiment of this application;
FIG. 9 is a signaling diagram of a yet further session processing method according to an embodiment of this application;
FIG. 10 is a signaling diagram of a still yet further session processing method according to an embodiment of this application;
FIG. 11 is a schematic structural diagram of a session processing apparatus according to an embodiment of this application;
FIG. 12 is a schematic structural diagram of another session processing apparatus according to an embodiment of this application;
FIG. 13 is a schematic structural diagram of still another session processing apparatus according to an embodiment of this application;
FIG. 14 is a schematic structural diagram of an SMF entity according to an embodiment of this application;
FIG. 15 is a schematic structural diagram of a terminal device according to an embodiment of this application; and
FIG. 16 is a schematic structural diagram of a NEF entity according to an embodiment of this application.

### DESCRIPTION OF EMBODIMENTS

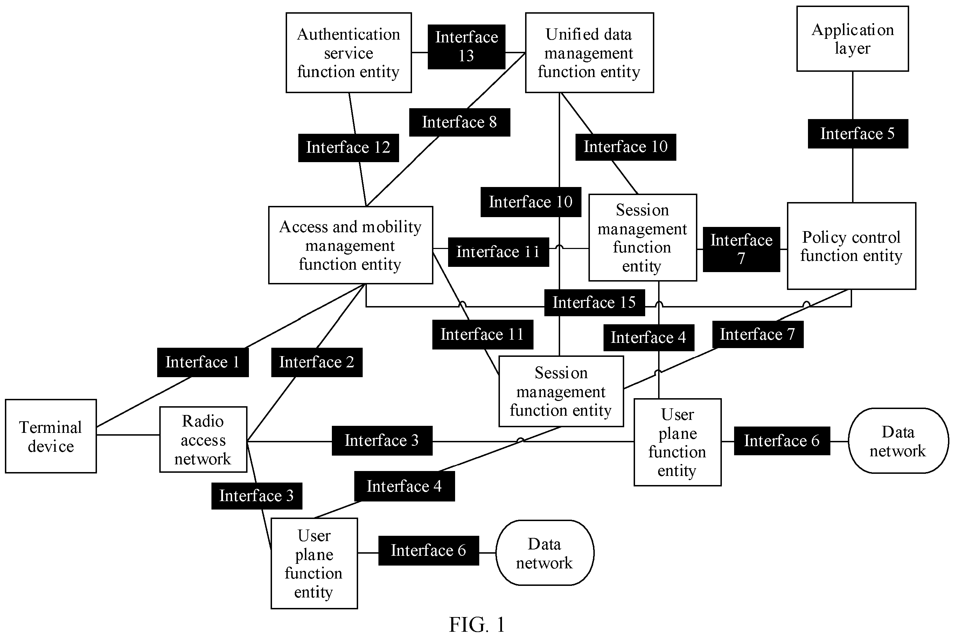

The following describes a technical solution in an example with reference to an accompanying drawing in the example. FIG. 1 shows a network structure. The network structure may be applied to a next-generation communications system. The following briefly describes each component in the network structure.

Mobile communications technologies are updated and upgraded, and research and standardization for 5G technologies have been launched. The 5G technologies may be applied to fields such as mobile broadband, multimedia, machine type communication (machine type communication, MTC), industrial control, and intelligent transportation systems (intelligent transportation system, ITS). To meet extensive changing service requirements, a 5G network needs to be flexibly constructed. A flexible 5G construction manner is to separate network functions. To be specific, a control plane (control plane, CP) function and a user plane (user plane, UP) function are separated, and a mobility management (mobility management, MM) function and a session management (session management, SM) function are separated in a CP. A network slicing (network slice) technology may be used to separate the network functions.

The network slicing technology may be used to divide one physical network into a plurality of virtual end-to-end networks. Virtual networks obtained through division are logically independent from each other, and a device, an access technology, a transmission path, a core network, and the like that are in one virtual network are respectively logically independent from those in another virtual network. Each network slice includes one independent network function or one instance of a function combination. Each network slice has a different function feature, and faces a different requirement and service. The network slices are separated from each other, so that different users or user groups may flexibly and dynamically customize network capabilities based on different application scenarios and requirements.

A network slice includes a control plane function (control plane function, CPF) entity and a user plane function (user plane function, UPF) entity. The CPF entity includes an access and mobility management function (access and mobility management function, AMF) entity and a session management function (session management function, SMF) entity. The CPF entity mainly completes functions such as access authentication, security encryption, and location registration that are of a terminal device, and establishment, release, and change that are of a user plane transmission path. The UPF entity mainly completes functions such as routing and forwarding of user plane data.

A terminal device may include various handheld devices, vehicle-mounted devices, wearable devices, or computing devices that have a wireless communication function, or another processing device connected to a wireless modem, and terminals in various forms such as mobile stations (mobile station, MS), terminals (terminal), user equipment (user equipment, UE), and software terminals, for example, a water meter, an electricity meter, and a sensor.

A radio access network is a network including a plurality of 5G-RAN nodes, and implements a radio physical layer function, resource scheduling and radio resource management, radio access control, and a mobility management function. For example, the 5G-RAN is connected to the UPF through a user plane interface N3, and is configured to transmit data of a terminal device. The 5G-RAN establishes a control plane signaling connection to an AMF through a control plane interface N2, to implement a function such as radio access bearer control.

An authentication server function (authentication server function, AUSF) entity is responsible for ensuring security authentication between the terminal device and the 5G network.

An AMF entity is responsible for mobility management, access management, and the like, and is configured to implement other functions than session management in functions of a mobility management entity (mobility management entity, MME). For example, the AMF entity is responsible for maintaining and managing status information of the terminal device, and responsible for authenticating the terminal device, selecting a network slice, and selecting an SMF entity.

An SMF entity is configured to: establish a session for the terminal device, allocate a session identity (identity, ID), and manage or terminate the session; select a user plane function (user plane function, UPF) entity; and select a network exposure function (network exposure function, NEF) entity.

A NEF entity is responsible for connecting the SMF entity to an external data network (data network, DN) that may include a third-party authentication entity.

A UPF entity provides functions such as session and bearer management, and IP address allocation, for example, is responsible for data packet filtering, data transmission/forwarding, rate control, and charging information generation that are of the terminal device.

A unified data management (unified data management, UDM) entity allocates reference information to a network entity, for example, allocates reference information to the SMF entity or the NEF entity.

A policy control function (policy control function, PCF) entity allocates reference information to the network entity, for example, allocates reference information to the SMF entity or the NEF entity.

A DN provides an external data network service.

A third-party authentication entity is a function entity for security authentication and authorization of an external data network, and may be configured to perform security authentication and authorization check for a user. For example, the third-party authentication entity may be a DN device, and the DN device may be any one of a DN-AAA server, an application layer (Application framework, AF), an AF-AAA, an application server (application-server), or an application-server-AAA.

As shown in FIG. 1, the foregoing components perform communication through each interface in the next-generation network architecture. For example, the terminal device may communicate with the AMF entity through an interface N1. When the terminal device needs to access a network, the terminal device initiates a PDU session establishment request to perform a PDU session establishment procedure. After the terminal device initiates the PDU session establishment request, each solution of this application may be implemented when a PDU session is established.

It should be noted that the nouns or terms used in the embodiments of this application may be mutually referenced, and details are not described again.

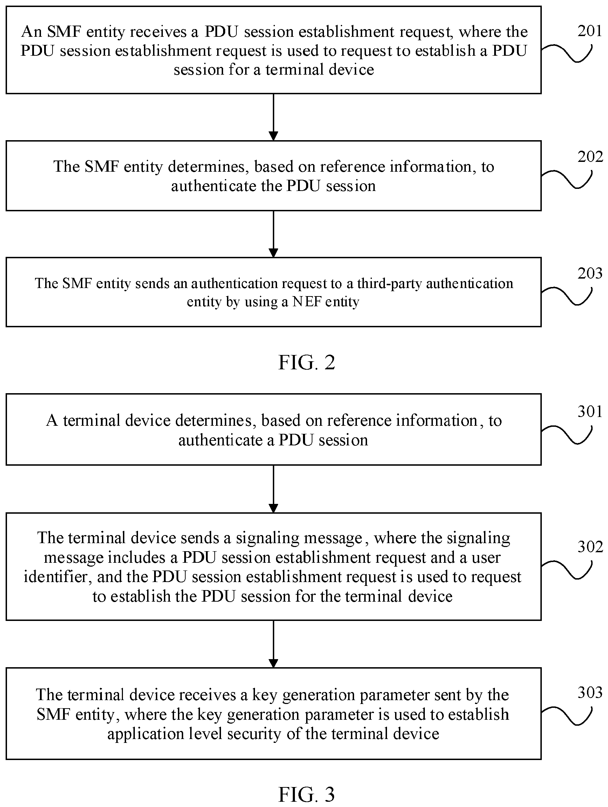

As shown in FIG. 2, an embodiment of this application provides a session processing method. The method is performed by an SMF entity, and the method is specifically described as follows.

201. The SMF entity receives a PDU session establishment request, where the PDU session establishment request is used to request to establish a PDU session for a terminal device.

The PDU session establishment request is carried in first signaling.

For example, the terminal device sends the first signaling to an AMF entity. The first signaling carries the PDU session establishment request, and the AMF entity sends the PDU session establishment request in the first signaling to the SMF entity. Specifically, after the AMF entity receives the PDU session establishment request, the AMF entity selects an appropriate SMF entity in a prior-art manner, namely, the SMF entity in step 201. Then, the AMF entity sends the PDU session establishment request to the selected SMF entity. For example, the AMF entity may send the first signaling to the selected SMF entity through an interface N11.

The first signaling may further include a DNN corresponding to the PDU session, and session management-network slice selection assistance information (session management-network slice selection assistance information, S-NSSAI), a PDU session identity (PDU session ID), and an application identifier that correspond to the PDU session. The DNN corresponding to the PDU session means that the PDU session is used to transmit data of a DN indicated by the DNN. The S-NSSAI corresponding to the PDU session is information about a slice corresponding to the PDU session. In other words, the session is established by using a resource of the slice. A slice may be based on several major technology groups such as cloud computing, virtualization, a software-defined network, and a distributed cloud architecture. A network is uniformly orchestrated by an upper layer to have management and collaboration capabilities, to implement a function of simultaneously supporting a plurality of logical networks based on a general physical network infrastructure platform. One slice may provide a same service type, or may be provided to one tenant (tenant) for use. For example, an internet of vehicles is a DN, and one or more slices may be allocated to the internet of vehicles, to provide a service for the internet of vehicles. An operator network allocates one piece of S-NSSAI to each slice.

The PDU session establishment request is used to request to establish the PDU session for the terminal device, and may carry a PDU type (PDU type) and a service and session continuity mode (service and session continuity mode, SSC mode). The PDU type may be used to indicate whether the PDU session uses internet protocol version 4 (internet protocol version 4, IPv4) or internet protocol version 6 (internet protocol version 6, IPv6). The service and session continuity mode may be used to indicate a service and session continuity mode of the PDU session. For example, an SSC mode 1 is used to indicate that an anchor of an IP address remains unchanged, and service continuity is supported. An SSC mode 2 is used to indicate that an anchor of an IP address is changeable, an old session may be first released, and then the terminal device is instructed to establish a new session. An SSC mode 3 is used to indicate that an old session is released after a new session is established for the terminal device.

202. The SMF entity determines, based on reference information, to authenticate the PDU session.

The reference information may include at least one of the following: a DNN, S-NSSAI, an application identifier, or at least one identifier of the terminal device.

It should be noted that the authentication of the PDU session in step 202 may be third-party authentication performed on the PDU session. The third-party authentication is authentication between the terminal device and a third-party authentication entity. In an example, the SMF entity determines, based on the reference information, to perform third-party authentication on the PDU session. The third-party authentication is the authentication between the terminal device and the third-party authentication entity. Optionally, the third-party authentication is authentication between a terminal device user and the third-party authentication entity.

For example, the application identifier is an identifier of a service, for example, an identifier of a service A.

203. The SMF entity sends an authentication request to a third-party authentication entity by using a NEF entity.

In an example, the SMF entity sends the authentication request to the NEF entity, and then the NEF entity sends the authentication request to the third-party authentication entity.

Step 202 may be implemented in the following manners.

Manner 1: If the first signaling further includes the DNN corresponding to the PDU session, and the reference information includes the DNN corresponding to the PDU session, the SMF entity determines to authenticate the PDU session.

For example, it is assumed that the AMF entity sends the first signaling to the SMF entity, and the first signaling carries the PDU session establishment request and the DNN (for example, a DNN 2) corresponding to the PDU session. If the reference information includes at least one DNN (for example, a DNN 1, the DNN 2, and a DNN 3), the SMF entity determines whether the reference information includes the DNN that corresponds to the PDU session and that is carried in the first signaling, and if the reference information includes the DNN that corresponds to the PDU session and that is carried in the first signaling, the SMF entity determines to authenticate the PDU session. The SMF entity may further determine that a third-party authentication entity corresponding to the DNN in the first signaling is the third-party authentication entity that currently needs to perform authentication with the terminal device.

Manner 2: If the first signaling further includes the application identifier corresponding to the PDU session, and the reference information includes the application identifier corresponding to the PDU session, the SMF entity determines to authenticate the PDU session.

For example, the AMF entity sends the first signaling to the SMF entity. The first signaling carries the PDU session establishment request and the application identifier (for example, an application identifier 1) corresponding to the PDU session. The reference information includes at least one application identifier (for example, the application identifier 1, an application identifier 2, and an application identifier 3). Then, the SMF entity determines whether the reference information includes the application identifier carried in the first signaling. If the reference information includes the application identifier in the first signaling, the SMF entity determines to authenticate the PDU session. The SMF entity may further determine that a third-party authentication entity corresponding to the application identifier in the first signaling is the third-party authentication entity that performs authentication with the terminal device.

Manner 3: If the first signaling further includes the DNN and the application identifier that correspond to the PDU session, and the reference information includes the DNN and the application identifier that correspond to the PDU session, the SMF entity determines to authenticate the PDU session.

For example, the AMF entity sends the first signaling to the SMF entity. The first signaling carries the PDU session establishment request and the DNN and the application identifier (for example, the DNN 1 and the application identifier 1) that correspond to the PDU session. The reference information includes a plurality of identifier combinations, and each identifier combination includes one DNN and one application identifier (for example, a combination of the DNN 1 and the application identifier 1, or a combination of the DNN 2 and the application identifier 2). Then, the SMF entity determines whether the identifier combinations of the reference information include the DNN and the application identifier that are carried in the first signaling. If the identifier combinations of the reference information include the DNN and the application identifier that are carried in the first signaling, the SMF entity determines to authenticate the PDU session. The SMF entity may further determine that a third-party authentication entity corresponding to the DNN and the application identifier that are in the first signaling is the third-party authentication entity that performs authentication with the terminal device.

Manner 4: If the first signaling further includes the DNN and the S-NSSAI that correspond to the PDU session, and the reference information includes the DNN and the S-NSSAI that correspond to the PDU session, the SMF entity determines to authenticate the PDU session.

For example, the AMF entity sends the first signaling to the SMF entity. The first signaling carries the PDU session establishment request and the DNN and the S-NSSAI (for example, the DNN 1 and S-NSSAI 1) that correspond to the PDU session. The reference information includes a plurality of identifier combinations, and each identifier combination includes one DNN and one piece of S-NSSAI (for example, a combination of the DNN 1 and the S-NSSAI 1, or a combination of the DNN 2 and S-NSSAI 2). Then, the SMF entity determines whether the identifier combinations of the reference information include the DNN and the S-NSSAI that are carried in the first signaling. If the identifier combinations of the reference information include the DNN and the S-NSSAI that are carried in the first signaling, the SMF entity determines to authenticate the PDU session. The SMF entity may further determine that a third-party authentication entity corresponding to the DNN and the S-NSSAI that are in the first signaling is the third-party authentication entity that performs authentication with the terminal device.

Manner 5: If the first signaling further includes an identifier of the terminal device, and the reference information includes the identifier of the terminal device, the SMF entity determines to authenticate the PDU session. To be specific, the reference information is a part of an SM context or an SM policy of the terminal device.

For example, the reference information includes the at least one identifier of the terminal device, and the terminal devices are terminal devices that the SMF entity determines to perform PDU session authentication with. The first signaling carries the PDU session establishment request and the identifier of the terminal device that sends the PDU session establishment request. Then, the SMF entity determines whether the reference information includes the identifier of the terminal device in the first signaling, and if the reference information includes the identifier of the terminal device in the first signaling, the SMF entity determines to authenticate the PDU session.

In addition, step 202 is not limited to the foregoing five implementations. For example, step 202 may be implemented based on only the S-NSSAI or the application identifier, and an implementation is similar to that described above.

For example, the AMF entity sends the first signaling to the SMF entity. The first signaling carries the PDU session establishment request and the S-NSSAI (for example, the S-NSSAI 1) corresponding to the PDU session. The reference information includes at least one piece of S-NSSAI (for example, the S-NSSAI 1 and the S-NSSAI 2). Then, the SMF entity determines whether the reference information includes the S-NSSAI carried in the first signaling. If the reference information includes the S-NSSAI in the first signaling, the SMF entity determines to authenticate the PDU session. The SMF entity may further determine that a third-party authentication entity corresponding to the S-NSSAI in the first signaling is the third-party authentication entity that performs authentication with the terminal device.

For another example, the AMF entity sends the first signaling to the SMF entity. The first signaling carries the PDU session establishment request and the S-NSSAI and the application identifier (for example, a combination of the S-NSSAI 1 and the application identifier 1) that correspond to the PDU session. The reference information includes a plurality of identifier combinations, and each identifier combination includes one piece of S-NSSAI and one application identifier (for example, the combination of the S-NSSAI 1 and the application identifier 1, or a combination of the S-NSSAI 2 and the application identifier 2). Then, the SMF entity determines whether the identifier combinations of the reference information include the S-NSSAI and the application identifier that are carried in the first signaling. If the identifier combinations of the reference information include the S-NSSAI and the application identifier that are carried in the first signaling, the SMF entity determines to authenticate the PDU session. The SMF entity may further determine that a third-party authentication entity corresponding to the S-NSSAI and the application identifier that are in the first signaling is the third-party authentication entity that performs authentication with the terminal device.

For still another example, the AMF entity sends the first signaling to the SMF entity. The first signaling carries the PDU session establishment request and three identifiers corresponding to the PDU session, and the three identifiers are the DNN, the S-NSSAI, and the application identifier (for example, a DNN 1, the S-NSSAI 1, and the application identifier 1). The reference information includes a plurality of identifier combinations, and each identifier combination includes one DNN, one piece of S-NSSAI, and one application identifier (for example, a combination of the DNN 1, the S-NSSAI 1, and the application identifier 1, or a combination of the DNN 2, the S-NSSAI 2, and the application identifier 2). Then, the SMF entity determines whether the identifier combinations of the reference information include an identifier combination that corresponds to the three identifiers and that is carried in the first signaling. If the reference information includes the identifier combination that corresponds to the three identifiers and that is carried in the first signaling, the SMF entity determines to authenticate the PDU session. The SMF entity may further determine that a third-party authentication entity corresponding to the three identifiers that are in the first signaling is the third-party authentication entity that performs authentication with the terminal device.

For yet another example, the reference information includes at least one of the DNN, the S-NSSAI, and the application identifier, and the reference information further includes the at least one identifier of the terminal device. Correspondingly, in addition to the PDU session establishment request, at least one of the DNN, the S-NSSAI, and the application identifier that correspond to the PDU session further need to be carried in the first signaling, and an identifier of the terminal device that sends the PDU session establishment request is further carried in the first signaling. For details, refer to the foregoing similar implementations. Details are not described again.

Step 203 may be implemented in two different manners.

Manner 1 of step 203: Step 203 includes 2031 and 2032.

2031. The SMF entity obtains an identifier of the third-party authentication entity based on a correspondence and the first signaling.

In an example, before the SMF entity sends the authentication request to the NEF entity, the SMF entity determines an identifier of a third-party authentication entity that receives the authentication request.

The identifier of the third-party authentication entity may be a name of the third-party authentication entity, or an ID of the third-party authentication entity, or address information of the third-party authentication entity, for example, an IP address.

Step 2031 may be implemented in the following manners.

Manner 1 of step 2031: When the first signaling includes the DNN corresponding to the PDU session of the third-party authentication entity, the SMF entity obtains the identifier of the third-party authentication entity based on the correspondence and the DNN corresponding to the PDU session of the third-party authentication entity.

The correspondence is a correspondence between the DNN and the identifier of the third-party authentication entity. For example, the correspondence between the DNN and the identifier of the third-party authentication entity may be that the DNN 1 corresponds to a third-party authentication entity 1, and the DNN 2 corresponds to a third-party authentication entity 2.

In an example, the AMF entity sends the first signaling to the SMF entity. The first signaling carries the PDU session establishment request and the DNN corresponding to the PDU session. After receiving the first signaling, the SMF entity may obtain the identifier of the third-party authentication entity based on the DNN in the first signaling and the correspondence between the DNN and the identifier of the third-party authentication entity.

Manner 2 of step 2031: When the first signaling includes the application identifier corresponding to the PDU session, the SMF entity obtains the identifier of the third-party authentication entity based on the correspondence and the application identifier corresponding to the PDU session.

The correspondence is a correspondence between the application identifier and the identifier of the third-party authentication entity. For example, the correspondence between the application identifier and the identifier of the third-party authentication entity may be that the application identifier 1 corresponds to the third-party authentication entity 1, and the application identifier 2 corresponds to the third-party authentication entity 2.

In an example, the AMF entity sends the first signaling to the SMF entity. The first signaling carries the PDU session establishment request and the application identifier corresponding to the PDU session. After receiving the first signaling, the SMF entity obtains the identifier of the third-party authentication entity based on the application identifier in the first signaling and the correspondence between the application identifier and the identifier of the third-party authentication entity.

Manner 3 of step 2031: When the first signaling includes the DNN and the application identifier that correspond to the PDU session, the SMF entity obtains the identifier of the third-party authentication entity based on the correspondence and the DNN and the application identifier that correspond to the PDU session.

The correspondence is a correspondence among the DNN, the application identifier, and the identifier of the third-party authentication entity. For example, the correspondence among the DNN, the application identifier, and the identifier of the third-party authentication entity may be that the DNN 1 and the application identifier 1 correspond to the third-party authentication entity 1, the DNN 1 and the application identifier 2 correspond to the third-party authentication entity 2, and the DNN 2 and the application identifier 1 correspond to the third-party authentication entity 2.

For example, the AMF entity sends the first signaling to the SMF entity. The first signaling carries the PDU session establishment request and the DNN and the application identifier that correspond to the PDU session. The SMF entity receives the first signaling. Then, the SMF entity obtains the identifier of the third-party authentication entity based on the DNN and the application identifier that are in the first signaling and the correspondence among the DNN, the application identifier, and the identifier of the third-party authentication entity.

Manner 4 of step 2031: When the first signaling includes the DNN and the S-NSSAI that correspond to the PDU session, the SMF entity obtains the identifier of the third-party authentication entity based on the correspondence and the DNN and the S-NSSAI that correspond to the PDU session. The correspondence is a correspondence among the DNN, the S-NSSAI, and the identifier of the third-party authentication entity.

2032. The SMF entity sends, by using the NEF entity, the authentication request to the third-party authentication entity indicated by the identifier of the third-party authentication entity.

In an example, the SMF entity sends the identifier of the third-party authentication entity and the authentication request to the NEF entity, and the NEF entity sends the authentication request to the third-party authentication entity indicated by the identifier of the third-party authentication entity.

Manner 2 of step 203: The first signaling further includes a user identifier, and the SMF entity obtains an identifier of the third-party authentication entity based on the user identifier. The SMF entity sends, by using the NEF entity, the authentication request to the third-party authentication entity indicated by the identifier of the third-party authentication entity.

In an example, a domain name of the user identifier is the identifier of the third-party authentication entity.

In an example, when step 203 is performed, this step may be performed by using the method provided in this manner. The AMF entity sends the first signaling to the SMF entity. The first signaling carries the PDU session establishment request and the user identifier. Then, the SMF entity may obtain the identifier of the third-party authentication entity based on the user identifier. Then, the SMF entity sends the identifier of the third-party authentication entity and the authentication request to the NEF entity, and the NEF entity sends the authentication request to the third-party authentication entity indicated by the identifier of the third-party authentication entity.

According to the method provided in the foregoing embodiment, the SMF entity receives the PDU session establishment request. The PDU session establishment request is used to request to establish the PDU session for the terminal device. After determining, based on the reference information, to authenticate the PDU session, the SMF entity sends the authentication request to the third-party authentication entity by using the NEF entity.

A control-plane-based PDU session authentication manner is provided, so that the third-party authentication entity may be authenticated on the SMF entity. In addition, the SMF entity sends the authentication request to the third-party authentication entity by using the NEF entity connected to the SMF entity, so that the third-party authentication entity may authenticate the terminal device. Further, the terminal device and the third-party authentication entity that is in a DN are required to perform mutual authentication, and the PDU session is established only when the authentication succeeds. Then, through the foregoing authentication for establishing the PDU session, the data network (data network, DN) can accept access by an authorized user and reject access by an unauthorized user, thereby improving security of the DN. In addition, the third-party authentication entity may notify a 5G network of an authentication result, and the 5G network may reject establishment of a PDU session for the unauthorized user, thereby saving network resources.

Optionally, in a first implementation scenario of the foregoing embodiment, after step 203, the foregoing method further includes step 204.

204. The SMF entity sends, to the terminal device, a request message for obtaining a user identifier, and the SMF entity receives a user identifier.

In an example, after step 203, the SMF entity sends, to the terminal device by using the AMF entity, the request message for obtaining a user identifier. After receiving the request message for obtaining a user identifier, the terminal device sends the user identifier to the SMF entity by using the AMF entity.

Optionally, in the first implementation scenario or a second implementation scenario of the foregoing embodiment, after step 203, the foregoing method further includes step 205 to step 2010.

205. The SMF entity receives an authentication message sent by the third-party authentication entity by using the NEF entity, where the authentication message is used to request the terminal device to send an authentication parameter.

The authentication parameter includes any one of the following: a certificate of the terminal device, a user name or password of the terminal device, an identity verification parameter, or a security key parameter. The identity verification parameter is used by the third-party authentication entity to verify an identity of the terminal device, and the security key parameter is used to generate a shared key between the terminal device and the third-party authentication entity.

In an example, after the NEF entity sends the authentication request to the third-party authentication entity in step 203, and after the third-party authentication entity receives the authentication request, the third-party authentication entity generates an authentication message. The authentication message is used to request the terminal device to provide the authentication parameter. Then, the third-party authentication entity sends the authentication message to the NEF entity. Then, the NEF entity sends the authentication message to the SMF entity.

206. The SMF entity sends the authentication message to the terminal device.

In an example, after step 205, the SMF entity sends the received authentication message to the AMF entity. Then, the AMF entity sends the authentication message to the terminal device. After the terminal device receives the authentication message, the terminal device returns the authentication parameter to the SMF entity by using the AMF entity.

207. The SMF entity receives the authentication parameter, and sends the authentication parameter to the third-party authentication entity by using the NEF entity.

In an example, after step 206, the terminal device sends the authentication parameter to the AMF entity. The AMF entity sends the authentication parameter to the SMF entity. Then, after the SMF entity receives the authentication parameter, the SMF entity sends the authentication parameter to the NEF entity, and the NEF entity sends the authentication parameter to the third-party authentication entity.

Then, the third-party authentication entity authenticates the terminal device based on the authentication parameter, and generates an authentication result. The authentication result indicates whether the authentication between the terminal device and the third-party authentication entity succeeds.

Then, the third-party authentication entity sends the generated authentication result to the NEF entity, and the NEF entity sends the authentication result to the SMF entity. Optionally, the third-party authentication entity sends an authentication feedback message to the NEF entity. The authentication result is carried in the authentication feedback message, and the authentication feedback message further includes a key generation parameter. Then, the NEF entity sends the authentication feedback message to the SMF entity. The key generation parameter is used to establish application level security between the terminal device and the third-party authentication entity.

208. The SMF entity receives an authentication result sent by the third-party authentication entity by using the NEF entity, where the authentication result is carried in an authentication feedback message, and the authentication feedback message further includes a key generation parameter.

In an example, after step 207, the SMF entity receives the authentication result generated by the third-party authentication entity. Optionally, the SMF entity receives the authentication feedback message.

209. When the authentication result indicates that the authentication between the terminal device and the third-party authentication entity succeeds, the SMF entity continues performing a PDU session establishment procedure.

In an example, after step 208, after the SMF entity receives the authentication result, if the SMF entity determines that the authentication result indicates that the authentication between the terminal device and the third-party authentication entity succeeds, the SMF entity continues performing the PDU session establishment procedure.

After step 208, the method may further include step 2010.

2010. The SMF entity sends the key generation parameter to the terminal device, where the key generation parameter is used to establish application level security between the terminal device and the third-party authentication entity.

In an example, after step 208, when the SMF entity receives the authentication feedback message, where the authentication feedback message carries the authentication result and the key generation parameter, the SMF entity may send the key generation parameter to the AMF entity, and then the AMF entity sends the key generation parameter to the terminal device. Step 209 and step 2010 may be simultaneously performed, or may not be simultaneously performed. This is not limited in this application.

Optionally, the SMF entity may send the authentication result and the key generation parameter together to the AMF entity, and then the AMF entity sends the authentication result and the key generation parameter to the terminal device. The terminal device establishes the application level security based on the key generation parameter only when the authentication result indicates that the authentication between the terminal device and the third-party authentication entity succeeds.

In an example, the key generation parameter may be used to establish a transport layer security (transport layer security, TLS) channel between the terminal device and the third-party authentication entity.

In an example, the terminal device may establish the application level security between the terminal device and the third-party authentication entity by directly using the key generation parameter. Alternatively, the terminal device may obtain another key generation parameter based on the key generation parameter, and the terminal device establishes the application level security between the terminal device and the third-party authentication entity by using the another key generation parameter.

Optionally, in the first implementation scenario or the second implementation scenario of the foregoing embodiment, the PDU session establishment request includes the authentication parameter, and after step 203, the method further includes step 2011 to step 2013.

2011. The SMF entity receives an authentication result sent by the third-party authentication entity by using the NEF entity.

The authentication parameter includes at least one of the following:
a certificate of the terminal device, a user name or password of the terminal device, an identity verification parameter, or a security key parameter.

The identity verification parameter is used by the third-party authentication entity to verify an identity of the terminal device, and the security key parameter is used to generate a shared key between the terminal device and the third-party authentication entity.

In an example, in step 201, the terminal device sends signaling to the AMF entity. The signaling carries the PDU session establishment request, and the signaling further includes the authentication parameter. In an example, the terminal device sends signaling to the AMF entity. The signaling carries the PDU session establishment request and the authentication parameter. Alternatively, in an example, the terminal device sends signaling to the AMF entity, where the signaling carries the PDU session establishment request, and the PDU session establishment request includes the authentication parameter.

Then, the AMF entity sends one piece of first signaling to the SMF entity. The first signaling carries the PDU session establishment request, and the signaling further includes the authentication parameter. In an example, the first signaling sent by the AMF entity includes the PDU session establishment request and the authentication parameter. Alternatively, in an example, the first signaling sent by the AMF entity includes the PDU session establishment request, and the PDU session establishment request includes the authentication parameter.

Then, the SMF entity sends the authentication request to the NEF entity. In this case, the authentication request includes the foregoing authentication parameter. The NEF entity sends, to the third-party authentication entity, the authentication request including the authentication parameter. In this case, after step 203, the third-party authentication entity authenticates the terminal device based on the authentication parameter in the authentication request, and generates an authentication result. The authentication result indicates whether the authentication between the terminal device and the third-party authentication entity succeeds.

Then, the third-party authentication entity sends the generated authentication result to the NEF entity, and the NEF entity sends the authentication result to the SMF entity. Optionally, the third-party authentication entity sends an authentication feedback message to the NEF entity. The authentication result is carried in the authentication feedback message, and the authentication feedback message further includes a key generation parameter. Then, the NEF entity sends the authentication feedback message to the SMF entity. The key generation parameter is used to establish application level security between the terminal device and the third-party authentication entity.

2012. When the authentication result indicates that the authentication between the terminal device and the third-party authentication entity succeeds, the SMF entity continues performing a PDU session establishment procedure.

In an example, after step 2011, if the SMF entity determines that the authentication result indicates that the authentication between the terminal device and the third-party authentication entity succeeds, the SMF entity continues performing the PDU session establishment procedure.

After step 2011, the method may further include step 2013.

2013. The SMF entity sends the key generation parameter to the terminal device, where the key generation parameter is used to establish application level security between the terminal device and the third-party authentication entity.

In an example, after step 208, when the SMF entity receives the foregoing authentication feedback message, where the authentication feedback message carries the authentication result and the key generation parameter, the SMF entity may send the key generation parameter to the AMF entity, and then the AMF entity sends the key generation parameter to the terminal device. Step 2012 and step 2013 may be simultaneously performed, or may not be simultaneously performed. This is not limited in this application.

Optionally, the SMF entity may send the authentication result and the key generation parameter together to the AMF entity, and then the AMF entity sends the authentication result and the key generation parameter to the terminal device. The terminal device establishes the application level security based on the key generation parameter only when the authentication result indicates that the authentication between the terminal device and the third-party authentication entity succeeds.

Optionally, with reference to the first implementation scenario, the second implementation scenario, the third implementation scenario, or the fourth implementation scenario, before step 202, the method further includes step 2014.

2014. The SMF entity configures reference information on the SMF entity; or the SMF entity obtains reference information from a UDM entity, a PCF entity, or the NEF entity.

In an example, the reference information may be configured by the SMF entity on the SMF entity, or the reference information may be configured on the UDM entity, the PCF entity, or the NEF entity.

Optionally, with reference to the first implementation scenario, the second implementation scenario, the third implementation scenario, the fourth scenario, or the fifth implementation scenario, the authentication request is carried in second signaling, and the second signaling further includes a first parameter.

The first parameter includes at least one of the following: the DNN corresponding to the PDU session, the S-NSSAI corresponding to the PDU session, the application identifier corresponding to the PDU session, or the identifier of the third-party authentication entity.

In an example, the SMF entity sends the second signaling to the NEF entity. The second signaling includes the foregoing authentication request and the foregoing first parameter. Optionally, the second signaling may further include an identifier of the SMF entity.

Optionally, in the third implementation scenario or the fourth implementation scenario of the foregoing embodiment, after step 208 or step 2010, the method further includes the following steps.

201a. The SMF entity selects a PCF entity when the authentication result received by the SMF entity indicates that the authentication between the terminal device and the third-party authentication entity succeeds.

In an example, when the authentication result indicates that the authentication between the terminal device and the third-party authentication entity succeeds, if a dynamic policy control and charging (policy control and charging, PCC) policy is deployed in the SMF entity, the SMF entity selects an appropriate PCF entity. In an example, the SMF entity selects a PCF entity based on the S-NSSAI. The SMF entity sends a PDU-controller area network (controller area network, CAN) session establishment (PDU-CAN Session Establishment) request to the PCF entity, to obtain a PCC rule corresponding to the PDU session.

201b. The SMF entity selects a UPF entity.

In an example, the SMF entity selects an appropriate UPF entity. For example, the SMF entity selects a UPF entity based on information such as location information of the terminal device, load information of a UPF, and the DNN

If the SMF entity does not send the PDU-CAN session establishment request to the PCF entity in 201a, step 201c is performed.

201c. The SMF entity sends a PDU-CAN session establishment request to the PCF entity.

In an example, if the SMF entity does not send the PDU-CAN session establishment request to the PCF entity in 201a, the SMF entity sends the PDU-CAN session establishment request to the PCF entity in this step. In addition, if a PDU type included in the dynamic PCC policy is IPv4 or IPv6, the SMF entity sends a PDU-CAN session modification (PDU-CAN Session Modification) request to the PCF entity, and the SMF entity sends an allocated IP address or IP prefix of the terminal device to the PCF entity.

201d. The SMF entity sends an N4 session establishment request (Session Establishment request), execution rules (enforcement rules) of a DU session, and tunnel information that is of a core network side to the UPF entity.

In an example, the tunnel information of the core network side refers to an uplink data tunnel identifier of an N3 tunnel of the PDU session, and the tunnel information of the core network side is used to uniquely identify data of the PDU session of the terminal device.

201e. The UPF entity sends a session establishment response (session establishment response) message to the SMF entity.

201f. The SMF entity sends N2 SM information and a PDU session establishment accept (PDU session establishment accept) message to the AMF entity.

In an example, the N2 SM information includes an identifier of the PDU session, a quality of service configuration (quality of service, QoS Profile(s)), and CN tunnel information (CN tunnel info). The PDU session establishment accept message includes an authorized QoS rule, an SSC mode, the S-NSSAI, and an IPv4 address.

The N2 SM information is used to send some parameters of the PDU session to a RAN (for example, a RAN node or a base station), so that the RAN establishes a corresponding air interface connection for the PDU session. The CN tunnel information is used to establish a data transmission channel between the RAN and the UPF entity for the PDU session. The PDU session establishment accept message is used to notify the terminal device that the PDU session is successfully established, and return some corresponding parameters of the PDU session to the terminal device.

201g. The AMF entity sends the N2 SM information and the PDU session establishment accept message in step 201f to a RAN

201h. The RAN and the terminal device perform signaling interworking of an access network (access network, AN).

In an example, an RRC connection reconfiguration procedure is performed to provide a corresponding radio resource for the PDU session. In addition, the RAN sends the PDU session establishment accept message to the terminal device.

201i. The RAN sends the N2 SM information to the SMF entity by using the AMF entity.

In an example, the N2 SM information in this case includes the identifier of the PDU session, RAN tunnel information ((R)AN tunnel info), and a list of authorized QoS configurations (list of accepted/rejected QoS profile(s)). The RAN tunnel information is used to establish a data transmission channel between the RAN and the UPF entity.

201j. The AMF entity sends the N2 SM information to the SMF entity.

201k. The SMF entity initiates an N4 session modification procedure.

In an example, the SMF entity initiates the N4 session modification procedure to the UPF entity. In this process, the SMF entity sends the RAN tunnel information to the UPF entity.

2011. The SMF entity returns a response message to the AMF entity.

201m. The SMF entity sends IP address information of an IPv6 type to the terminal device by using the UPF entity.

201n. The SMF initiates a procedure for releasing a resource of a source access network side.

In an example, if the PDU session establishment procedure is caused by switching between the 3rd generation partnership project (3rd generation partnership project, 3GPP) and the N-3GPP, the SMF entity initiates the procedure for releasing a resource of a source access network side.

201o. The SMF entity sends a registration request to a UDM.

In an example, the SMF entity sends the registration request to the UDM, in other words, the SMF entity is registered with the UDM entity. Then, the SMF entity notifies the UDM entity of an SMF entity that serves a current PDU session of the terminal device. In addition, the UDM entity may store a correspondence among the identifier of the SMF entity, an address of the SMF entity, and the DNN

As shown in FIG. 3, an embodiment of this application provides another session processing method. The method is performed by a terminal device, and is specifically described as follows.

301. The terminal device determines, based on reference information, to authenticate a PDU session.

The reference information includes at least one of the following: a DNN, S-NSSAI, or an application identifier. Refer to related descriptions in the embodiment shown in FIG. 2.

For example, step 301 may be implemented in the following manners.

Manner 1 of step 301: If the reference information includes a DNN corresponding to the PDU session, the terminal device determines to authenticate the PDU session.

Manner 2 of step 301: If the reference information includes an application identifier corresponding to the PDU session, the terminal device determines to authenticate the PDU session.

Manner 3 of step 301: If the reference information includes a DNN and an application identifier that correspond to the PDU session, the terminal device determines to authenticate the PDU session.

Manner 4 of step 301: If the reference information includes a DNN and S-NSSAI that correspond to the PDU session, the terminal device determines to authenticate the PDU session.

In an example, before the terminal device needs to perform the PDU session with a third-party authentication entity, the terminal device first needs to perform a PDU session establishment procedure. Before the terminal device performs the PDU session establishment procedure, the terminal device needs to determine, based on the reference information, to authenticate the PDU session.

Specifically, if the terminal device determines that the reference information includes the DNN corresponding to the PDU session, the terminal device determines to authenticate the PDU session.

Alternatively, if the terminal device determines that the reference information includes the application identifier corresponding to the PDU session, the terminal device determines to authenticate the PDU session.

Alternatively, if the terminal device determines that the reference information includes the S-NSSAI corresponding to the PDU session, the terminal device determines to authenticate the PDU session.

Alternatively, if the reference information includes a plurality of identifier combinations, and each identifier combination includes one DNN and one application identifier, when the terminal device determines that an identifier combination in the reference information includes the DNN and the application identifier that correspond to the PDU session, the terminal device determines to authenticate the PDU session.

Alternatively, if the reference information includes a plurality of identifier combinations, and each identifier combination includes one DNN and one piece of S-NSSAI, when the terminal device determines that an identifier combination in the reference information includes the DNN and the S-NSSAI that correspond to the PDU session, the terminal device determines to authenticate the PDU session.

Alternatively, if the reference information includes a plurality of identifier combinations, and each identifier combination includes one application identifier and one piece of S-NSSAI, when the terminal device determines that an identifier combination in the reference information includes the application identifier and the S-NSSAI that correspond to the PDU session, the terminal device determines to authenticate the PDU session.

Alternatively, if the reference information includes a plurality of identifier combinations, and each identifier combination includes one DNN, one application identifier, and one piece of S-NSSAI, when the terminal device determines that an identifier combination in the reference information includes the DNN, the application identifier, and the S-NSSAI that correspond to the PDU session, the terminal device determines to authenticate the PDU session.

It should be noted that, for an implementation of step 301, refer to the implementation of step 202. Execution bodies are different, but execution actions are similar. In addition, for nouns used in this embodiment, refer to related descriptions in the embodiment shown in FIG. 2. Details are not described again.

302. The terminal device sends a signaling message, where the signaling message includes a PDU session establishment request and a user identifier, and the PDU session establishment request is used to request to establish the PDU session for the terminal device.

In an example, the terminal device sends the signaling to an AMF entity. The signaling includes the PDU session establishment request and the user identifier. In another example, the terminal device sends signaling to an AMF entity. The signaling includes the PDU session establishment request, and the PDU session establishment request includes the user identifier.

Then, the AMF entity sends one piece of first signaling to an SMF entity, where the first signaling includes the PDU session establishment request and the user identifier.

According to the method provided in the foregoing embodiment, the terminal device determines, based on the reference information, to authenticate the PDU session; and the terminal device sends the first signaling. The first signaling includes the PDU session establishment request, and the first signaling further includes the user identifier. A control-plane-based PDU session authentication manner is provided, so that the third-party authentication entity may be authenticated on the terminal device. In addition, the SMF entity sends an authentication request to the third-party authentication entity by using a NEF entity connected to the SMF entity, so that the third-party authentication entity may authenticate the terminal device. Further, the terminal device and the third-party authentication entity that is in a DN are required to perform mutual authentication, and the PDU session is established only when the authentication succeeds. Then, through the foregoing authentication for establishing the PDU session, the DN can accept access by an authorized user and reject access by an unauthorized user, thereby improving security of the DN. In addition, the third-party authentication entity may notify a 5G network of an authentication result, and the 5G network may reject establishment of a PDU session for the unauthorized user, thereby saving network resources.

Optionally, in a first implementation scenario of the foregoing embodiment, in step 302, the first signaling further includes at least one of the following: the application identifier corresponding to the PDU session or an authentication parameter.

In an example, in step 302, the terminal device sends signaling to the AMF entity. The signaling includes the PDU session establishment request, and the signaling further includes the authentication parameter. In an example, the terminal device sends signaling to the AMF entity. The signaling carries the PDU session establishment request and the authentication parameter. Alternatively, in an example, the terminal device sends signaling to the AMF entity. The signaling carries the PDU session establishment request, and the PDU session establishment request includes the authentication parameter.

Then, the AMF entity sends one piece of first signaling to the SMF entity. The first signaling carries the PDU session establishment request, and the signaling further includes the authentication parameter. In an example, first signaling sent by the AMF entity includes the PDU session establishment request and the authentication parameter. Alternatively, in an example, first signaling sent by the AMF entity includes the PDU session establishment request, and the PDU session establishment request includes the authentication parameter.

Then, after the SMF entity receives the PDU session establishment request, the SMF entity sends an authentication request to a NEF entity. In this case, the authentication request includes the authentication parameter. The NEF entity sends, to the third-party authentication entity, the authentication request including the authentication parameter. The third-party authentication entity may authenticate the terminal device based on the authentication parameter in the authentication request, and generate an authentication result. The authentication result indicates whether the authentication between the terminal device and the third-party authentication entity succeeds.

Then, the third-party authentication entity sends the generated authentication result to the NEF entity, and the NEF entity sends the authentication result to the SMF entity. Optionally, the third-party authentication entity sends an authentication feedback message to the NEF entity. The authentication result is carried in the authentication feedback message, and the authentication feedback message further includes a key generation parameter. Then, the NEF entity sends the authentication feedback message to the SMF entity. The key generation parameter is used to establish application level security between the terminal device and the third-party authentication entity. For this step, refer to steps 2011 and 2012 in FIG. 2.

Optionally, in any implementation scenario of the foregoing embodiment, after step 302, the method further includes step 303.

Step 303. The terminal device receives a key generation parameter sent by the SMF entity, where the key generation parameter is used to establish application level security of the terminal device.

In an example, after step 302, when the SMF entity receives the foregoing authentication feedback message, where the authentication feedback message carries the authentication result and the key generation parameter, the SMF entity may send the key generation parameter to the AMF entity, and then the AMF entity sends the key generation parameter to the terminal device. For this step, refer to step 2013 in FIG. 2.

Optionally, in any implementation scenario of the foregoing embodiment, after step 302, the method further includes step 304.

304. The terminal device receives a user identifier request, and sends the user identifier.

In an example, after step 302, the SMF entity sends, to the terminal device by using the AMF entity, a request message for obtaining the user identifier. After receiving the request message for obtaining the user identifier, the terminal device sends the user identifier to the SMF entity by using the AMF entity.

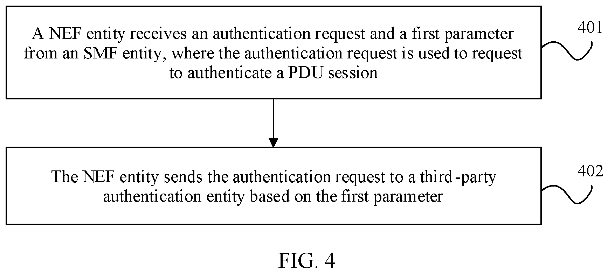

As shown in FIG. 4, an embodiment of this application provides still another session processing method. The method is performed by a NEF entity, and the method includes the following steps.

401. The NEF entity receives an authentication request and a first parameter from an SMF entity, where the authentication request is used to request to authenticate a PDU session.

The first parameter includes at least one of the following: a DNN corresponding to the PDU session, S-NSSAI corresponding to the PDU session, an application identifier corresponding to the PDU session, or an identifier of the third-party authentication entity.

In an example, a terminal device sends signaling to an AMF entity. The signaling carries a PDU session establishment request. Then, after receiving the PDU session establishment request, the AMF entity sends signaling to a selected SMF entity. The signaling carries the PDU session establishment request.

Then, the SMF entity sends the authentication request and the first parameter to the NEF entity. Optionally, the SMF entity sends signaling to the NEF entity. The signaling includes the authentication request and the first parameter.

402. The NEF entity sends the authentication request to a third-party authentication entity based on the first parameter.

In an example, the NEF entity determines, based on the first parameter, a third-party authentication entity to which the authentication request needs to be sent. Then, the NEF entity may send the authentication request to the determined third-party authentication entity.

Step 402 may include step 4021 and step 4022.

4021. The NEF entity obtains an identifier of the third-party authentication entity based on the first parameter.

For example, step 4021 may be implemented in the following manners.

Manner 1 of step 4021: When the first parameter includes the DNN corresponding to the PDU session, the NEF entity obtains the identifier of the third-party authentication entity based on a first correspondence and the first parameter. The first correspondence is a correspondence between the DNN and the identifier of the third-party authentication entity.

Manner 2 of step 4021: When the first parameter includes the application identifier corresponding to the PDU session, the NEF entity obtains the identifier of the third-party authentication entity based on a second correspondence and the first parameter. The second correspondence is a correspondence between the application identifier and the identifier of the third-party authentication entity.

Manner 3 of step 4021: When the first parameter includes the DNN and the application identifier that correspond to the PDU session, the NEF entity obtains the identifier of the third-party authentication entity based on a third correspondence and the first parameter. The third correspondence is a correspondence among the DNN, the application identifier, and the identifier of the third-party authentication entity.

Manner 4 of step 4021: When the first parameter includes the DNN and the S-NSSAI that correspond to the PDU session, the NEF entity obtains the identifier of the third-party authentication entity based on a fifth correspondence and the first parameter. The fifth correspondence is a correspondence among the DNN, the S-NSSAI, and the identifier of the third-party authentication entity.

In an example, the NEF entity obtains the identifier of the third-party authentication entity based on the first parameter. Specifically, the first parameter includes the DNN corresponding to the PDU session. The NEF entity obtains, based on the first correspondence between the DNN and the identifier of the third-party authentication entity, the identifier that is of the third-party authentication entity and that corresponds to the DNN in the first parameter. In an example, the first correspondence may be that a DNN 1 corresponds to a third-party authentication entity 1, and a DNN 2 corresponds to a third-party authentication entity 2.

Alternatively, the first parameter includes the application identifier corresponding to the PDU session. The NEF entity obtains, based on the second correspondence between the application identifier and the identifier of the third-party authentication entity, the identifier that is of the third-party authentication entity and that corresponds to the application identifier in the first parameter. In an example, the second correspondence may be that an application identifier 1 corresponds to the third-party authentication entity 1, and an application identifier 2 corresponds to the third-party authentication entity 2.

Alternatively, the first parameter includes the DNN and the application identifier that correspond to the PDU session. The NEF entity obtains the identifier of the third-party authentication entity based on the third correspondence among the DNN, the application identifier, and the identifier of the third-party authentication entity. In an example, the third correspondence may be that the DNN 1 and the application identifier 1 correspond to the third-party authentication entity 1, the DNN 1 and the application identifier 2 correspond to the third-party authentication entity 2, and the DNN 2 and the application identifier 1 correspond to the third-party authentication entity 2.

Alternatively, the first parameter includes the S-NSSAI corresponding to the PDU session. The NEF entity obtains, based on a fourth correspondence between the S-NSSAI and the identifier of the third-party authentication entity, the identifier that is of the third-party authentication entity and that corresponds to the S-NSSAI in the first parameter. In an example, the fourth correspondence may be that S-NSSAI 1 corresponds to the third-party authentication entity 1, and S-NSSAI 2 corresponds to the third-party authentication entity 2.

Alternatively, the first parameter includes the DNN and the S-NSSAI that correspond to the PDU session. The NEF entity obtains the identifier of the third-party authentication entity based on the fifth correspondence among the DNN, the S-NSSAI, and the identifier of the third-party authentication entity. In an example, the fifth correspondence may be that the DNN 1 and the S-NSSAI 1 correspond to the third-party authentication entity 1, the DNN 1 and the S-NSSAI 2 correspond to the third-party authentication entity 2, and the DNN 2 and the S-NSSAI 1 correspond to the third-party authentication entity 2.

Alternatively, the first parameter includes the application identifier and the S-NSSAI that correspond to the PDU session. The NEF entity obtains the identifier of the third-party authentication entity based on a sixth correspondence among the application identifier, the S-NSSAI, and the identifier of the third-party authentication entity. In an example, the sixth correspondence may be that the application identifier 1 and the S-NSSAI 1 correspond to the third-party authentication entity 1, the application identifier 1 and the S-NSSAI 2 correspond to the third-party authentication entity 2, and the application identifier 2 and the S-NSSAI 1 correspond to the third-party authentication entity 2.

Alternatively, the first parameter includes the DNN, the application identifier, and the S-NSSAI that correspond to the PDU session. The NEF entity obtains the identifier of the third-party authentication entity based on a seventh correspondence among the DNN, the application identifier, the S-NSSAI, and the identifier of the third-party authentication entity. In an example, the seventh correspondence may be that the DNN 1, the application identifier 1, and the S-NSSAI 1 correspond to the third-party authentication entity 1; the DNN 1, the application identifier 2, and the S-NSSAI 2 correspond to the third-party authentication entity 2; and the DNN 3, the application identifier 2 and the S-NSSAI 1 correspond to the third-party authentication entity 1.

In an example, the identifier of the third-party authentication entity may be a name of the third-party authentication entity, an ID of the third-party authentication entity, or address information of the third-party authentication entity.

4022. The NEF entity sends the authentication request to the third-party authentication entity indicated by the identifier of the third-party authentication entity.

In an example, after the NEF entity determines the identifier of the third-party authentication entity, the NEF entity may directly send the authentication request to the third-party authentication entity indicated by the identifier of the third-party authentication entity.

According to the method provided in the foregoing embodiment, the NEF entity receives the authentication request and the first parameter from the SMF entity, and then the NEF entity sends the authentication request to the third-party authentication entity based on the first parameter. A control-plane-based PDU session authentication manner is provided, so that the third-party authentication entity may be authenticated on the NEF entity. In addition, the SMF entity sends the authentication request to the third-party authentication entity by using the NEF entity connected to the SMF entity, so that the third-party authentication entity may authenticate the terminal device. Further, the terminal device and the third-party authentication entity that is in a DN are required to perform mutual authentication, and the PDU session is established only when the authentication succeeds. Then, through the foregoing authentication for establishing the PDU session, the DN can accept access by an authorized user and reject access by an unauthorized user, thereby improving security of the DN. In addition, the third-party authentication entity may notify a 5G network of an authentication result, and the 5G network may reject establishment of a PDU session for the unauthorized user, thereby saving network resources.

Optionally, in a first implementation scenario of the foregoing embodiment, when steps 4021 and 4022 are not performed, before 401, the SMF entity may determine, based on reference information, to authenticate the PDU session. Refer to step 202 in FIG. 2. Details are not described again.

Optionally, in the first implementation scenario of the foregoing embodiment, before step 402, the method further includes step 403.

403. The NEF entity determines, based on reference information, to authenticate the PDU session, where the reference information includes at least one of the following: a DNN, S-NSSAI, or an application identifier.

For example, step 403 may be implemented in the following manners.

Manner 1 of step 403: If the reference information includes the DNN in the first parameter, the NEF entity determines to authenticate the PDU session.

Manner 2 of step 403: If the reference information includes the application identifier in the first parameter, the NEF entity determines to authenticate the PDU session.

Manner 3 of step 403: If the reference information includes the DNN and the application identifier that are in the first parameter, the NEF entity determines to authenticate the PDU session.

Manner 4 of step 403: If the reference information includes the DNN and the S-NSSAI that are in the first parameter, the NEF entity determines to authenticate the PDU session.

In an example, specifically, the reference information includes at least one DNN, and the first parameter includes the DNN corresponding to the PDU session. When the NEF entity determines that the reference information includes the DNN in the first parameter, the NEF entity determines to authenticate the PDU session.

Alternatively, the reference information includes at least one application identifier, and the first parameter includes the application identifier corresponding to the PDU session. When the NEF entity determines that the reference information includes the application identifier in the first parameter, the NEF entity determines to authenticate the PDU session.

Alternatively, the reference information includes at least one piece of S-NSSAI, and the first parameter includes the S-NSSAI corresponding to the PDU session. When the NEF entity determines that the reference information includes the S-NSSAI in the first parameter, the NEF entity determines to authenticate the PDU session.

Alternatively, the reference information includes a plurality of identifier combinations, each identifier combination includes one DNN and one application identifier, and the first parameter includes the DNN and the application identifier that correspond to the PDU session. When the NEF entity determines that an identifier combination in the reference information includes the DNN and the application identifier that are in the first parameter, the NEF entity determines to authenticate the PDU session.

Alternatively, the reference information includes a plurality of identifier combinations, each identifier combination includes one DNN and one piece of S-NSSAI, and the first parameter includes the DNN and the S-NSSAI that correspond to the PDU session. When the NEF entity determines that an identifier combination in the reference information includes the DNN and the S-NSSAI that are in the first parameter, the NEF entity determines to authenticate the PDU session.

Alternatively, the reference information includes a plurality of identifier combinations, each identifier combination includes one application identifier and one piece of S-NSSAI, and the first parameter includes the application identifier and the S-NSSAI that correspond to the PDU session. When the NEF entity determines that an identifier combination in the reference information includes the application identifier and the S-NSSAI that are in the first parameter, the NEF entity determines to authenticate the PDU session.

Alternatively, the reference information includes a plurality of identifier combinations, each identifier combination includes one DNN, one application identifier, and one piece of S-NSSAI, and the first parameter includes the DNN, the application identifier, and the S-NSSAI that correspond to the PDU session. When the NEF entity determines that an identifier combination in the reference information includes the DNN, the application identifier, and the S-NSSAI that are in the first parameter, the NEF entity determines to authenticate the PDU session.

Optionally, in the first implementation scenario, a second implementation scenario, or a third implementation scenario of the foregoing embodiment, before step 401, the foregoing method further includes either of step 404 and step 405.

404. The NEF entity configures reference information on the NEF entity, and sends the reference information to the SMF entity. Alternatively, the NEF entity obtains the reference information from a UDM entity or a PCF entity, and sends the reference information to the SMF entity.

In an example, before step 401, the NEF entity configures the reference information on the NEF entity, and then sends the reference information to the SMF entity.

Alternatively, the reference information exists on the UDM entity or on the PCF entity, and the NEF entity may send a request to the UDM entity or the PCF entity, to obtain the reference information. After obtaining the reference information, the NEF entity may send the reference information to the SMF entity.

405. The NEF entity receives a service registration request sent by the third-party authentication entity, where the service registration request is used to request the NEF entity to complete a service registration procedure with the third-party authentication entity.

When the service registration procedure succeeds, the NEF entity generates the reference information, and sends the reference information to the SMF entity or the PCF entity; or when the service registration procedure succeeds, the NEF entity sends a first message to the PCF entity. The first message is used by the PCF entity to generate the reference information.

In an example, before step 401, the third-party authentication entity may send the service registration request to the NEF entity. The service registration request is used to request the NEF entity to complete the service registration process with the third-party authentication entity. Then, the NEF entity completes service registration. Then, the NEF entity may obtain some information of the third-party authentication entity based on the service registration request sent by the third-party authentication entity. For example, the NEF entity obtains the DNN, the application identifier, and the like. When the service registration procedure succeeds, the NEF entity generates the reference information, and sends the reference information to the SMF entity or the PCF entity.

Alternatively, when the service registration procedure succeeds, the NEF entity sends the first message to the PCF entity. The first message carries at least one of the DNN, the S-NSSAI, or the application identifier. Then, based on the first message, the PCF entity generates the reference information, generates a PCC policy, or generates the reference information and a PCC policy.

Optionally, in any implementation scenario of the foregoing embodiment, the authentication request and the first parameter are carried in signaling, and the signaling further includes an identifier of the SMF entity. Step 402 may include:
sending, by the NEF entity, the authentication request and the identifier of the SMF entity to the third-party authentication entity; or converting, by the NEF entity, the identifier of the SMF entity into an external identifier of the SMF entity, and sending, by the NEF entity, the authentication request and the external identifier to the third-party authentication entity.

In an example, referring to step 401, the SMF entity sends signaling to the NEF entity. The signaling includes the authentication request, the first parameter, and the identifier of the SMF entity.

During implementation of step 402, the NEF entity may convert the identifier of the SMF entity into the external identifier of the SMF entity. Then, the NEF entity adds the external identifier to a message sent to the third-party authentication entity. Specifically, the NEF entity may send signaling to the third-party authentication entity. The signaling includes the authentication request and the external identifier. The identifier of the SMF entity may be hidden by converting the identifier of the SMF entity into the external identifier of the SMF entity. Alternatively, during implementation of step 402, the NEF entity may send one piece of signaling to the third-party authentication entity. The signaling includes the authentication request and the identifier of the SMF entity.

Optionally, in any implementation scenario of the foregoing embodiment, step 402 may be implemented in another manner.

The another manner of step 402: The authentication request includes a user identifier; the NEF entity determines the identifier of the third-party authentication entity based on the user identifier; and the NEF entity sends the authentication request to the third-party authentication entity indicated by the identifier of the third-party authentication entity.

In an example, the SMF entity sends signaling to the NEF entity. The signaling includes the authentication request and the first parameter, and the authentication request includes the user identifier. After the NEF entity receives the authentication request, the NEF entity determines the identifier of the third-party authentication entity based on the user identifier in the authentication request. The identifier of the third-party authentication entity may be a name of the third-party authentication entity, an ID of the third-party authentication entity, or address information of the third-party authentication entity. Then, the NEF entity may directly send the authentication request to the third-party authentication entity indicated by the identifier of the third-party authentication entity.

Optionally, in any implementation scenario of the foregoing embodiment, before step 402, the foregoing method further includes step 405.

405. The NEF entity establishes a binding relationship between the SMF entity and the third-party authentication entity.

In an example, before step 402, the NEF entity may bind the SMF entity to the third-party authentication entity. In an example, the NEF entity receives signaling sent by the SMF entity. The signaling includes the first parameter and the identifier of the SMF entity, and the first parameter includes the identifier of the third-party authentication entity. Then, the NEF entity may establish a binding relationship between the identifier of the SMF entity and the identifier of the third-party authentication entity, to bind the SMF entity to the third-party authentication entity.

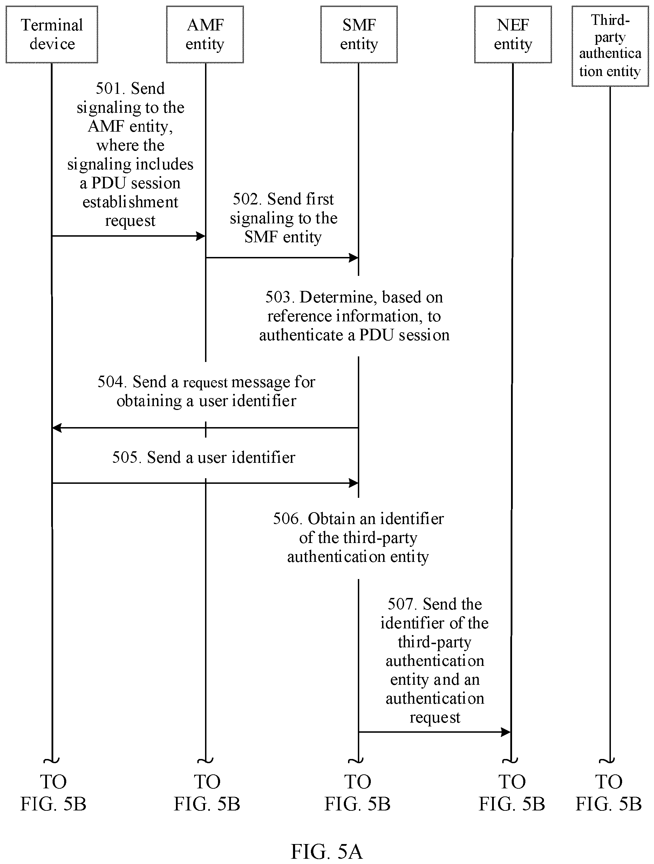

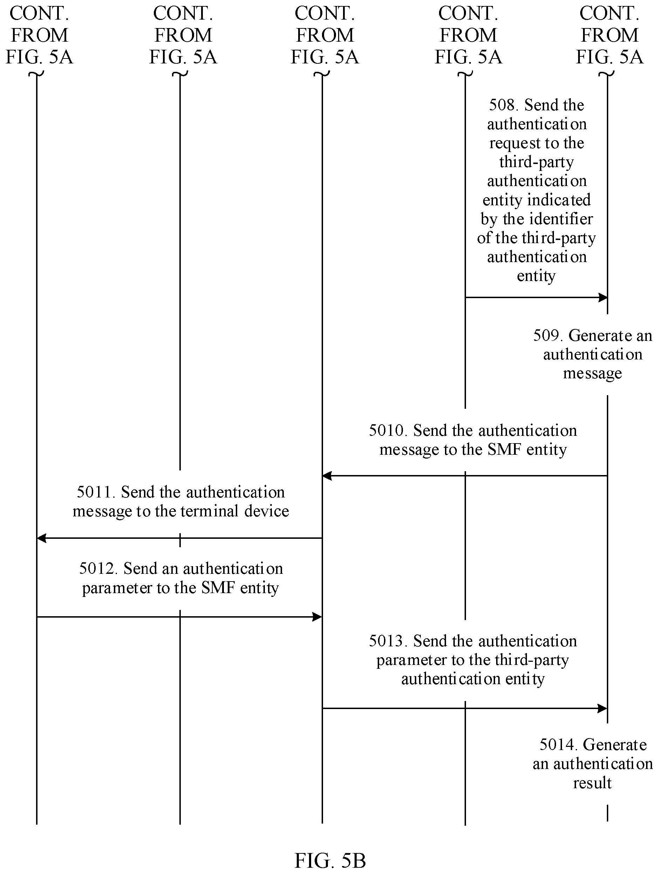

As shown in FIG. 5A and FIG. 5B, an embodiment of this application provides yet another session processing method. The method is specifically described as follows.

501. A terminal device sends signaling to an AMF entity, where the signaling includes a PDU session establishment request, and the PDU session establishment request is used to request to establish a PDU session for the terminal device.

In an example, for this step, refer to step 201 in FIG. 2. Details are not described again.

502. The AMF entity sends one piece of first signaling to an SMF entity, where the first signaling includes the PDU session establishment request in step 501.

In an example, for this step, refer to step 201 in FIG. 2. Details are not described again.

503. The SMF entity determines, based on reference information, to authenticate the PDU session.

The reference information includes at least one of the following: a DNN, session management-network slice selection assistance information (session management-network slice selection assistance information, S-NSSAI), an application identifier, or at least one identifier of the terminal device.

In an example, for this step, refer to step 202 in FIG. 2. Details are not described again.

504. The SMF entity sends, to the terminal device by using the AMF entity, a request message for obtaining a user identifier.

505. The terminal device sends a user identifier to the SMF entity by using the AMF entity.

In an example, for this step, refer to step 202 in FIG. 2. Details are not described again.

506. The SMF entity obtains an identifier of the third-party authentication entity based on a correspondence and the first signaling.

Alternatively, step 506 may be replaced by another step: When the first signaling further includes the user identifier, the SMF entity obtains an identifier of the third-party authentication entity based on the user identifier.

That the SMF entity obtains an identifier of the third-party authentication entity based on a correspondence and the first signaling may be implemented in the following manners.

Manner 1: When the first signaling includes a DNN corresponding to the PDU session, the SMF entity obtains the identifier of the third-party authentication entity based on the correspondence and the DNN corresponding to the PDU session. The correspondence is a correspondence between the DNN and the identifier of the third-party authentication entity.

Manner 2: When the first signaling includes an application identifier corresponding to the PDU session, the SMF entity obtains the identifier of the third-party authentication entity based on the correspondence and the application identifier corresponding to the PDU session. The correspondence is a correspondence between the application identifier and the identifier of the third-party authentication entity.

Manner 3: When the first signaling includes the DNN and the application identifier that correspond to the PDU session, the SMF entity obtains the identifier of the third-party authentication entity based on the correspondence and the DNN and the application identifier that correspond to the PDU session. The correspondence is a correspondence among the DNN, the application identifier, and the identifier of the third-party authentication entity.

In an example, for this step, refer to the descriptions of the manner 1 and the manner 2 of step 203 in FIG. 2. Details are not described again.

507. The SMF entity sends the identifier of the third-party authentication entity and an authentication request to a NEF entity.

In an example, the SMF entity sends second signaling to the NEF entity. The second signaling includes the authentication request and a first parameter, and the first parameter includes the identifier of the third-party authentication entity.

508. The NEF entity sends the authentication request to the third-party authentication entity indicated by the identifier of the third-party authentication entity.

In an example, for this step, refer to the descriptions of the manner 1 and the manner 2 of step 203 in FIG. 2. Details are not described again.

509. The third-party authentication entity generates an authentication message, where the authentication message is used to request the terminal device to provide an authentication parameter.

5010. The third-party authentication entity sends the authentication message to the SMF entity by using the NEF entity.

In an example, for step 509 and step 5010, refer to step 205. Details are not described again.

5011. The SMF entity sends the authentication message to the terminal device by using the AMF entity.

In an example, for this step, refer to step 206. Details are not described again.

5012. The terminal device sends the authentication parameter to the SMF entity by using the AMF entity.

In an example, for this step, refer to step 207. Details are not described again.

5013. The SMF entity sends the authentication parameter to the third-party authentication entity by using the NEF entity.

In an example, for this step, refer to step 207. Details are not described again.

5014. The third-party authentication entity authenticates the terminal device based on the authentication parameter, and generates an authentication result, where the authentication result indicates whether the authentication between the terminal device and the third-party authentication entity succeeds.

5015. The third-party authentication entity sends the authentication result to the SMF entity by using the NEF entity, where the authentication result is carried in an authentication feedback message, and the authentication feedback message further includes a key generation parameter.

In an example, for step 5014 and step 5015, refer to step 208. Details are not described again.

5016. When the SMF entity determines that the authentication result indicates that the authentication between the terminal device and the third-party authentication entity succeeds, the SMF entity continues performing a PDU session establishment procedure.

In an example, for this step, refer to step 209. Details are not described again.

After step 5015, the method further includes:
5017. The SMF entity sends the key generation parameter to the terminal device, where the key generation parameter is used to establish application level security between the terminal device and the third-party authentication entity. Step 5016 and step 5017 may be simultaneously performed or may not be simultaneously performed.

In an example, for this step, refer to step 2010. Details are not described again.

According to the method provided in the foregoing embodiment, the SMF entity receives the PDU session establishment request. The PDU session establishment request is used to request to establish the PDU session for the terminal device. After determining, based on the reference information, to authenticate the PDU session, the SMF entity sends the authentication request to the third-party authentication entity by using the NEF entity. A control-plane-based PDU session authentication manner is provided, so that the third-party authentication entity may be authenticated on the SMF entity. In addition, the SMF entity sends the authentication request to the third-party authentication entity by using the NEF entity connected to the SMF entity, so that the third-party authentication entity may authenticate the terminal device. Further, the terminal device and the third-party authentication entity that is in a DN are required to perform mutual authentication, and the PDU session is established only when the authentication succeeds. Then, through the foregoing authentication for establishing the PDU session, the DN can accept access by an authorized user and reject access by an unauthorized user, thereby improving security of the DN. In addition, the third-party authentication entity may notify a 5G network of an authentication result, and the 5G network may reject establishment of a PDU session for the unauthorized user, thereby saving network resources.

Optionally, in a first implementation scenario of the foregoing embodiment, before step 503, a step may further be performed: The SMF entity configures the reference information on the SMF entity; or the SMF entity obtains the reference information from a UDM entity, a PCF entity, or the NEF entity. Refer to the description of step 2014. Details are not described again.

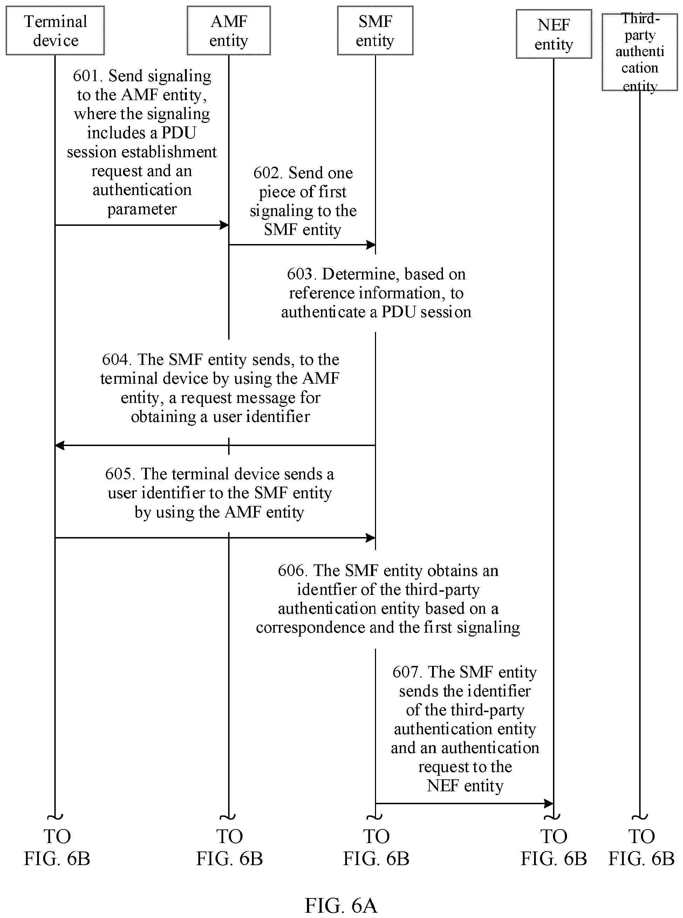

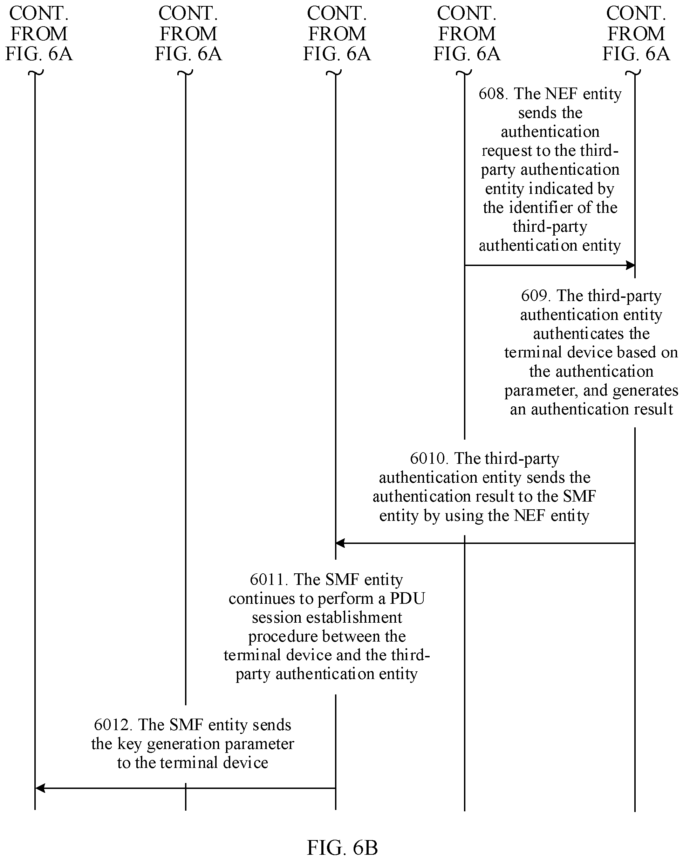

As shown in FIG. 6A and FIG. 6B, an embodiment of this application provides still yet another session processing method. The method is specifically described as follows.

601. A terminal device sends signaling to an AMF entity, where the signaling includes a PDU session establishment request and an authentication parameter, and the PDU session establishment request is used to request to establish a PDU session for the terminal device.

In an example, for this step, refer to step 201 in FIG. 2. A difference from step 201 is that the signaling in 601 includes the authentication parameter.

602. The AMF entity sends one piece of first signaling to an SMF entity, where the first signaling includes the PDU session establishment request and the authentication parameter that are in step 601.

In an example, for this step, refer to step 201 in FIG. 2. A difference from step 201 is that the first signaling in 602 includes the authentication parameter.

603. The SMF entity determines, based on reference information, to authenticate the PDU session.

The reference information includes at least one of the following: a DNN, S-NSSAI, an application identifier, or at least one identifier of the terminal device.

In an example, for this step, refer to step 202 in FIG. 2. Details are not described again.

604. The SMF entity sends, to the terminal device by using the AMF entity, a request message for obtaining a user identifier.

605. The terminal device sends a user identifier to the SMF entity by using the AMF entity.

In an example, for this step, refer to step 202 in FIG. 2. Details are not described again.

606. The SMF entity obtains an identifier of the third-party authentication entity based on a correspondence and the first signaling. Alternatively, when the first signaling further includes the user identifier, the SMF entity obtains an identifier of the third-party authentication entity based on the user identifier.

In an example, for this step, refer to the descriptions of the manner 1 and the manner 2 of step 203 in FIG. 2. Details are not described again.

607. The SMF entity sends the identifier of the third-party authentication entity and an authentication request to a NEF entity, where the authentication request includes the authentication parameter.

In an example, the SMF entity sends second signaling to the NEF entity. The second signaling includes the authentication request and a first parameter, and the first parameter includes the identifier of the third-party authentication entity.

608. The NEF entity sends the authentication request to the third-party authentication entity indicated by the identifier of the third-party authentication entity.

In an example, for this step, refer to the descriptions of the manner 1 and the manner 2 of step 203 in FIG. 2. A difference from step 203 is that the authentication request includes the authentication parameter.

609. The third-party authentication entity authenticates the terminal device based on the authentication parameter, and generates an authentication result, where the authentication result indicates whether the authentication between the terminal device and the third-party authentication entity succeeds.

6010. The third-party authentication entity sends the authentication result to the SMF entity by using the NEF entity, where the authentication result is carried in an authentication feedback message, and the authentication feedback message further includes a key generation parameter.

In an example, for step 609 and step 6010, refer to step 2011. Details are not described again.

6011. When the SMF entity determines that the authentication result indicates that the authentication between the terminal device and the third-party authentication entity succeeds, the SMF entity continues performing a PDU session establishment procedure between the terminal device and the third-party authentication entity.

In an example, for this step, refer to step 2012. Details are not described again.

After step 6010, the method further includes:
6012. The SMF entity sends the key generation parameter to the terminal device, where the key generation parameter is used to establish application level security between the terminal device and the third-party authentication entity.

In an example, for this step, refer to step 2013. Details are not described again.

According to the method provided in the foregoing embodiment, the SMF entity receives the PDU session establishment request. The PDU session establishment request is used to request to establish the PDU session for the terminal device. After determining, based on the reference information, to authenticate the PDU session, the SMF entity sends the authentication request to the third-party authentication entity by using the NEF entity. A control-plane-based PDU session authentication manner is provided, so that the third-party authentication entity may be authenticated on the SMF entity. In addition, the SMF entity sends the authentication request to the third-party authentication entity by using the NEF entity connected to the SMF entity, so that the third-party authentication entity may authenticate the terminal device. Further, the terminal device and the third-party authentication entity that is in a DN are required to perform mutual authentication, and the PDU session is established only when the authentication succeeds. Then, through the foregoing authentication for establishing the PDU session, the DN can accept access by an authorized user and reject access by an unauthorized user, thereby improving security of the DN. In addition, the third-party authentication entity may notify a 5G network of an authentication result, and the 5G network may reject establishment of a PDU session for the unauthorized user, thereby saving network resources.

Optionally, in a first implementation scenario of the foregoing embodiment, before step 603, a step may further be performed: The SMF entity configures the reference information on the SMF entity; or the SMF entity obtains the reference information from a UDM entity, a PCF entity, or the NEF entity. Refer to the description of step 2014. Details are not described again.

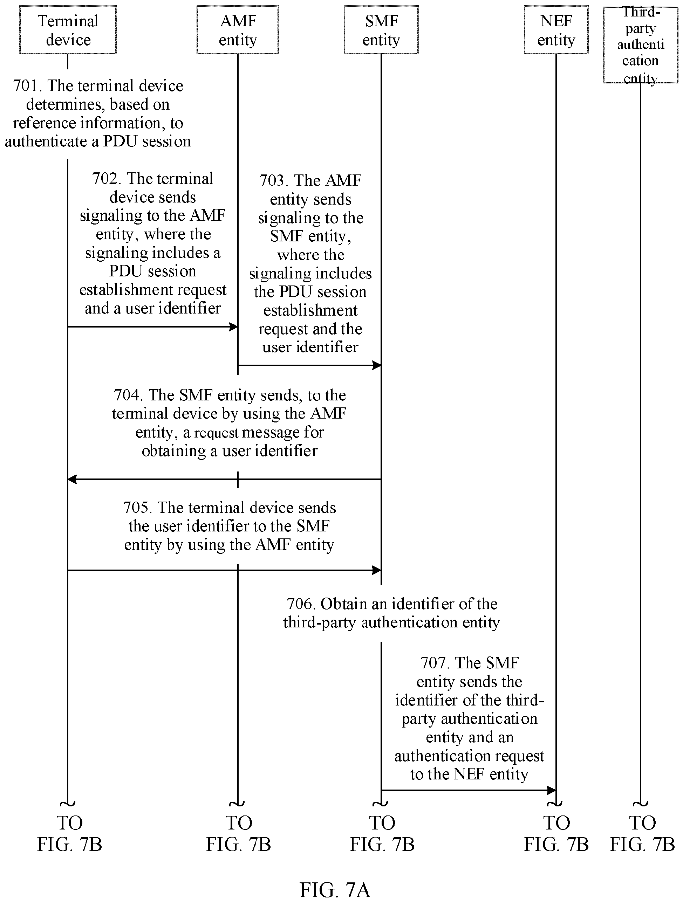

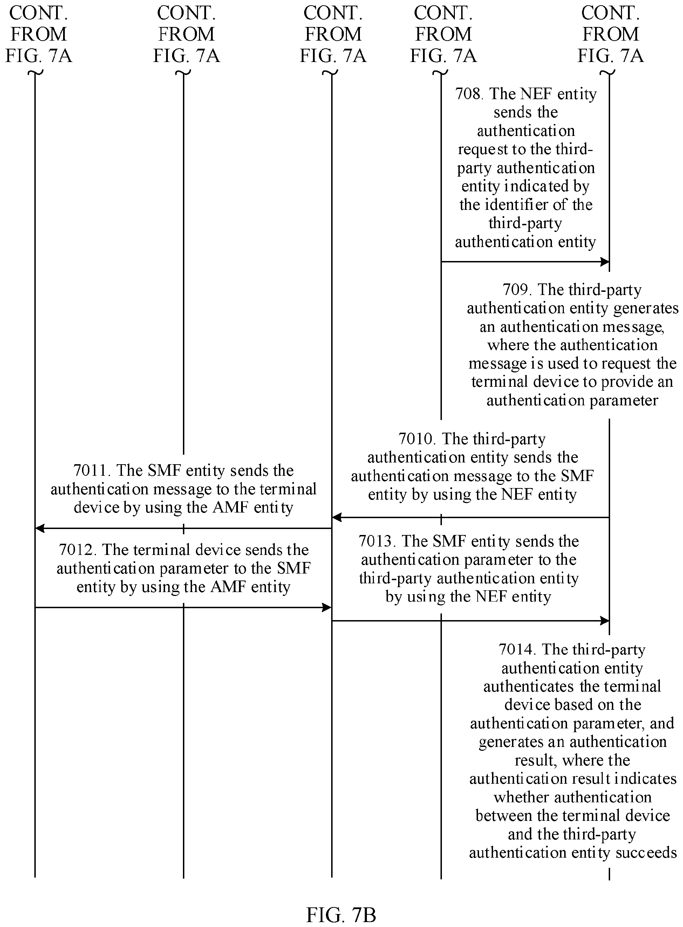

As shown in FIG. 7A and FIG. 7B, an embodiment of this application provides a further session processing method. The method is specifically described as follows.

701. A terminal device determines, based on reference information, to authenticate a PDU session.

The reference information includes at least one of the following: a DNN, S-NSSAI, or an application identifier.

In an example, for this step, refer to step 301. Details are not described again.

702. The terminal device sends signaling to an AMF entity, where the signaling includes a PDU session establishment request and a user identifier.

703. The AMF entity sends signaling to an SMF entity, where the signaling includes the PDU session establishment request and the user identifier.

In an example, for steps 702 and 703, refer to step 302. Details are not described again.

704. The SMF entity sends, to the terminal device by using the AMF entity, a request message for obtaining a user identifier.

705. The terminal device sends the user identifier to the SMF entity by using the AMF entity.

706. The SMF entity obtains an identifier of the third-party authentication entity based on a correspondence and the signaling in step 703. Alternatively, the SMF entity obtains the identifier of the third-party authentication entity based on the user identifier in 705.

In an example, the PDU session is a current PDU session between the terminal device and the third-party authentication entity. A DNN corresponding to the PDU session is a DNN corresponding to the PDU session. An application identifier corresponding to the PDU session is an application identifier corresponding to the PDU session. S-NSSAI corresponding to the PDU session is S-NSSAI corresponding to the PDU session.

That the SMF entity obtains an identifier of the third-party authentication entity based on a correspondence and the signaling in step 703 may be implemented in the following manners.

Manner 1: When the signaling in step 703 includes the DNN corresponding to the PDU session, the SMF entity obtains the identifier of the third-party authentication entity based on the correspondence and the DNN corresponding to the PDU session. The correspondence is a correspondence between the DNN and the identifier of the third-party authentication entity.

Manner 2: When the signaling in step 703 includes the application identifier corresponding to the PDU session, the SMF entity obtains the identifier of the third-party authentication entity based on the correspondence and the application identifier corresponding to the PDU session. The correspondence is a correspondence between the application identifier and the identifier of the third-party authentication entity.

Manner 3: When the signaling in step 703 includes the DNN and the application identifier that correspond to the PDU session, the SMF entity obtains the identifier of the third-party authentication entity based on the correspondence and the DNN and the application identifier that correspond to the PDU session. The correspondence is a correspondence among the DNN, the application identifier, and the identifier of the third-party authentication entity.

707. The SMF entity sends the identifier of the third-party authentication entity and an authentication request to a NEF entity.

In an example, the SMF entity sends signaling to the NEF entity. The signaling includes the authentication request and a first parameter, and the first parameter includes the identifier of the third-party authentication entity.

708. The NEF entity sends the authentication request to the third-party authentication entity indicated by the identifier of the third-party authentication entity.

709. The third-party authentication entity generates an authentication message, where the authentication message is used to request the terminal device to provide an authentication parameter.

7010. The third-party authentication entity sends the authentication message to the SMF entity by using the NEF entity.

In an example, for step 709 and step 7010, refer to the description of step 205. Details are not described again.

7011. The SMF entity sends the authentication message to the terminal device by using the AMF entity.

In an example, for this step, refer to the description of step 206. Details are not described again.

7012. The terminal device sends the authentication parameter to the SMF entity by using the AMF entity.

In an example, for this step, refer to the description of step 207. Details are not described again.

7013. The SMF entity sends the authentication parameter to the third-party authentication entity by using the NEF entity.

In an example, for this step, refer to the description of step 207. Details are not described again.

7014. The third-party authentication entity authenticates the terminal device based on the authentication parameter, and generates an authentication result, where the authentication result indicates whether the authentication between the terminal device and the third-party authentication entity succeeds.

7015. The third-party authentication entity sends the authentication result to the SMF entity by using the NEF entity, where the authentication result is carried in an authentication feedback message, and the authentication feedback message further includes a key generation parameter.

In an example, for step 7014 and step 7015, refer to the description of step 208. Details are not described again.

7016. When the SMF entity determines that the authentication result indicates that the authentication between the terminal device and the third-party authentication entity succeeds, the SMF entity continues performing a PDU session establishment procedure between the terminal device and the third-party authentication entity.

In an example, for this step, refer to the description of step 209. Details are not described again.

After step 7015, the method further includes the following step.

7017. The SMF entity sends the key generation parameter to the terminal device, where the key generation parameter is used to establish application level security between the terminal device and the third-party authentication entity.

In an example, for this step, refer to the description of step 2010. Details are not described again. Step 7016 and step 7017 may be simultaneously performed or may not be simultaneously performed.

According to the method provided in the foregoing embodiment, the terminal device determines, based on the reference information, to authenticate the PDU session; and the terminal device sends the first signaling. The first signaling includes the PDU session establishment request, and the first signaling further includes the user identifier. A control-plane-based PDU session authentication manner is provided, so that the third-party authentication entity may be authenticated on the terminal device. In addition, the SMF entity sends the authentication request to the third-party authentication entity by using the NEF entity connected to the SMF entity, so that the third-party authentication entity may authenticate the terminal device. Further, the terminal device and the third-party authentication entity that is in a DN are required to perform mutual authentication, and the PDU session is established only when the authentication succeeds. Then, through the foregoing authentication for establishing the PDU session, the DN can accept access by an authorized user and reject access by an unauthorized user, thereby improving security of the DN. In addition, the third-party authentication entity may notify a 5G network of an authentication result, and the 5G network may reject establishment of a PDU session for the unauthorized user, thereby saving network resources.

Optionally, in a first implementation scenario of the foregoing embodiment, steps 704 and 705 may not be performed. In this case, the signaling sent by the terminal device to the AMF entity in step 702 includes the PDU session establishment request and the user identifier. For example, the terminal device sends the PDU session establishment request and the user identifier to the AMF entity, and the PDU session establishment request and the user identifier are both carried in the signaling. Alternatively, the terminal device sends signaling to the AMF entity. The signaling includes the PDU session establishment request, and the PDU session establishment request includes the user identifier. Then, in step 703, the AMF entity sends signaling to the SMF entity. The signaling includes the PDU session establishment request and the user identifier.

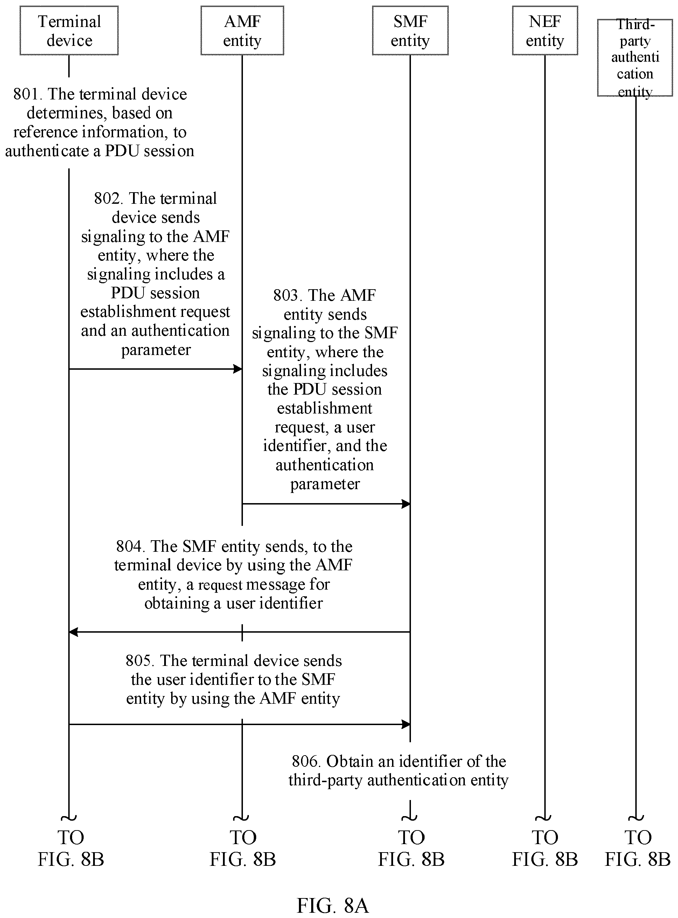

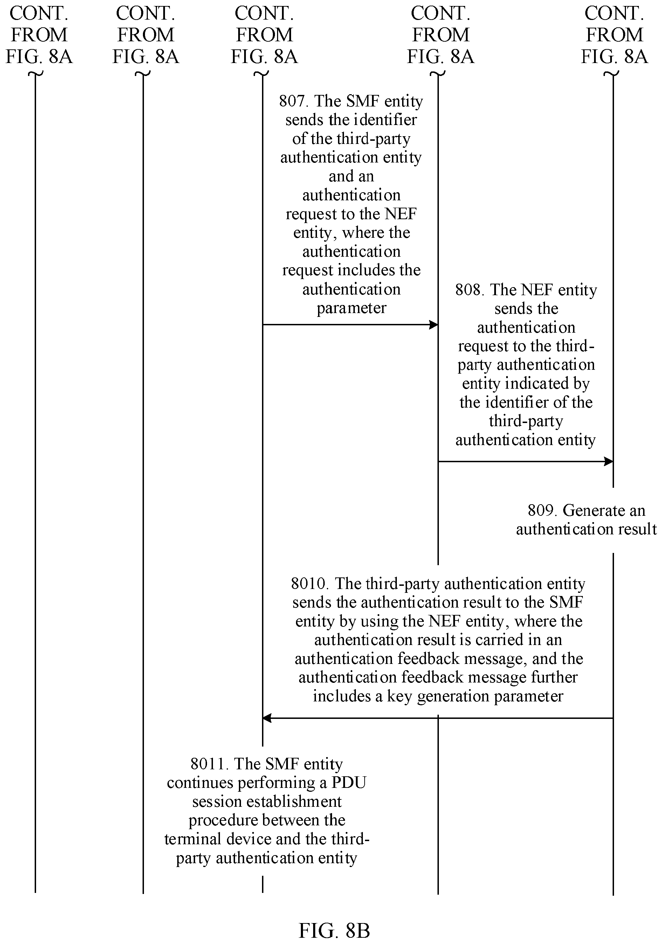

As shown in FIG. 8A and FIG. 8B, an embodiment of this application provides a still further session processing method. The method is specifically described as follows.

801. A terminal device determines, based on reference information, to authenticate a PDU session.

The reference information includes at least one of the following: a DNN, S-NSSAI, or an application identifier.

In an example, for this step, refer to step 301. Details are not described again.

802. The terminal device sends signaling to an AMF entity, where the signaling includes a PDU session establishment request and an authentication parameter.

803. The AMF entity sends signaling to an SMF entity, where the signaling includes the PDU session establishment request, a user identifier, and the authentication parameter.

In an example, for steps 802 and 803, refer to step 302. Details are not described again.

804. The SMF entity sends, to the terminal device by using the AMF entity, a request message for obtaining a user identifier.

805. The terminal device sends the user identifier to the SMF entity by using the AMF entity.

806. The SMF entity obtains an identifier of the third-party authentication entity based on a correspondence and the signaling in step 803. Alternatively, step 806 may be replaced by another step: The SMF entity obtains an identifier of the third-party authentication entity based on the user identifier in 805.

In an example, the PDU session is a current PDU session between the terminal device and the third-party authentication entity. A DNN corresponding to the PDU session is a DNN corresponding to the PDU session. An application identifier corresponding to the PDU session is an application identifier corresponding to the PDU session. S-NSSAI corresponding to the PDU session is S-NSSAI corresponding to the PDU session.

807. The SMF entity sends the identifier of the third-party authentication entity and an authentication request to a NEF entity, where the authentication request includes the authentication parameter.

In an example, the SMF entity sends signaling to the NEF entity. The signaling includes the authentication request and a first parameter, the first parameter includes the identifier of the third-party authentication entity, and the authentication request includes the authentication parameter.

808. The NEF entity sends the authentication request to the third-party authentication entity indicated by the identifier of the third-party authentication entity.

In an example, the authentication request in step 808 includes the authentication parameter.

809. The third-party authentication entity authenticates the terminal device based on the authentication parameter, and generates an authentication result, where the authentication result indicates whether the authentication between the terminal device and the third-party authentication entity succeeds.

8010. The third-party authentication entity sends the authentication result to the SMF entity by using the NEF entity, where the authentication result is carried in an authentication feedback message, and the authentication feedback message further includes a key generation parameter.

In an example, the third-party authentication entity sends the generated authentication result to the NEF entity, and the NEF entity sends the authentication result to the SMF entity. Optionally, the third-party authentication entity sends the authentication feedback message to the NEF entity. The authentication result is carried in the authentication feedback message, and the authentication feedback message further includes the key generation parameter. Then, the NEF entity sends the authentication feedback message to the SMF entity. The key generation parameter is used to establish application level security between the terminal device and the third-party authentication entity.

8011. When the SMF entity determines that the authentication result indicates that the authentication between the terminal device and the third-party authentication entity succeeds, the SMF entity continues performing a PDU session establishment procedure between the terminal device and the third-party authentication entity.

In an example, for this step, refer to the description of step 209. Details are not described again.

After step 8010, the method further includes the following step.

8012. The SMF entity sends the key generation parameter to the terminal device, where the key generation parameter is used to establish application level security between the terminal device and the third-party authentication entity.

In an example, for this step, refer to the description of step 2010. Details are not described again. Step 8011 and step 8012 may be simultaneously performed or may not be simultaneously performed.

According to the method provided in the foregoing embodiment, the terminal device determines, based on the reference information, to authenticate the PDU session; and the terminal device sends the first signaling. The first signaling includes the PDU session establishment request, and the first signaling further includes the user identifier. A control-plane-based PDU session authentication manner is provided, so that the third-party authentication entity may be authenticated on the terminal device. In addition, the SMF entity sends the authentication request to the third-party authentication entity by using the NEF entity connected to the SMF entity, so that the third-party authentication entity may authenticate the terminal device. Further, the terminal device and the third-party authentication entity that is in a DN are required to perform mutual authentication, and the PDU session is established only when the authentication succeeds. Then, through the foregoing authentication for establishing the PDU session, the DN can accept access by an authorized user and reject access by an unauthorized user, thereby improving security of the DN. In addition, the third-party authentication entity may notify a 5G network of an authentication result, and the 5G network may reject establishment of a PDU session for the unauthorized user, thereby saving network resources.

Optionally, in a first implementation scenario of the foregoing embodiment, steps 804 and 805 may not be performed. In this case, the signaling sent by the terminal device to the AMF entity in step 802 includes the PDU session establishment request and the user identifier. For example, the terminal device sends the PDU session establishment request and the user identifier to the AMF entity. The PDU session establishment request and the user identifier are both carried in the signaling. Alternatively, the terminal device sends the signaling to the AMF entity. The signaling includes the PDU session establishment request, and the PDU session establishment request includes the user identifier. Then, in step 803, the AMF entity sends the signaling to the SMF entity. The signaling includes the PDU session establishment request and the user identifier.

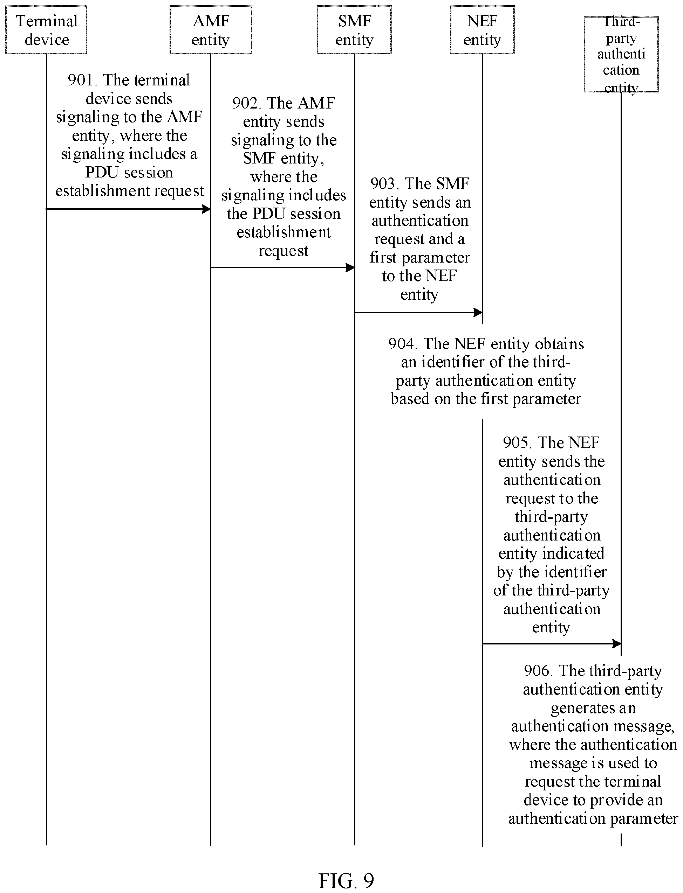

As shown in FIG. 9, an embodiment of this application provides a yet further session processing method. The method is specifically described as follows.

901. A terminal device sends signaling to an AMF entity, where the signaling includes a PDU session establishment request.

902. The AMF entity sends signaling to an SMF entity, where the signaling includes the PDU session establishment request.

903. The SMF entity sends an authentication request and a first parameter to a NEF entity.

In an example, for step 901 to step 903, refer to step 401. Details are not described again.

904. The NEF entity obtains an identifier of the third-party authentication entity based on the first parameter.

The first parameter includes at least one of the following: a DNN corresponding to the PDU session, S-NSSAI corresponding to the PDU session, an application identifier corresponding to the PDU session, or the identifier of the third-party authentication entity.

For example, step 904 may be implemented in the following manners.

Manner 1 of step 904: When the first parameter includes the DNN, the NEF entity obtains the identifier of the third-party authentication entity based on a first correspondence and the first parameter. The first correspondence is a correspondence between the DNN and the identifier of the third-party authentication entity.

Manner 2 of step 904: When the first parameter includes the application identifier, the NEF entity obtains the identifier of the third-party authentication entity based on a second correspondence and the first parameter. The second correspondence is a correspondence between the application identifier and the identifier of the third-party authentication entity.

Manner 3 of step 904: When the first parameter includes the DNN and the application identifier, the NEF entity obtains the identifier of the third-party authentication entity based on a third correspondence and the first parameter. The third correspondence is a correspondence among the DNN, the application identifier, and the identifier of the third-party authentication entity.

In an example, for this step, refer to step 4021. Details are not described again.

905. The NEF entity sends the authentication request to the third-party authentication entity indicated by the identifier of the third-party authentication entity.

In an example, for this step, refer to step 4022. Details are not described again.

906. The third-party authentication entity generates an authentication message, where the authentication message is used to request the terminal device to provide an authentication parameter.

907. The third-party authentication entity sends the authentication message to the SMF entity by using the NEF entity.

In an example, for step 906 and step 907, refer to the description of step 205. Details are not described again.

908. The SMF entity sends the authentication message to the terminal device by using the AMF entity.

In an example, for this step, refer to the description of step 206. Details are not described again.

909. The terminal device sends the authentication parameter to the SMF entity by using the AMF entity.

In an example, for this step, refer to the description of step 207. Details are not described again.

9010. The SMF entity sends the authentication parameter to the third-party authentication entity by using the NEF entity.

In an example, for this step, refer to the description of step 207. Details are not described again.

9011. The third-party authentication entity authenticates the terminal device based on the authentication parameter, and generates an authentication result, where the authentication result indicates whether the authentication between the terminal device and the third-party authentication entity succeeds.

9012. The third-party authentication entity sends the authentication result to the SMF entity by using the NEF entity, where the authentication result is carried in an authentication feedback message, and the authentication feedback message further includes a key generation parameter.

In an example, for step 9011 and step 9012, refer to the description of step 208. Details are not described again.

9013. When the SMF entity determines that the authentication result indicates that the authentication between the terminal device and the third-party authentication entity succeeds, the SMF entity continues performing a PDU session establishment procedure between the terminal device and the third-party authentication entity.

In an example, for this step, refer to the description of step 209. Details are not described again.

After step 9012, the method further includes the following step.

9014. The SMF entity sends the key generation parameter to the terminal device, where the key generation parameter is used to establish application level security between the terminal device and the third-party authentication entity.

In an example, for this step, refer to the description of step 2010. Details are not described again. Step 9013 and step 9014 may be simultaneously performed or may not be simultaneously performed.

According to the method provided in the foregoing embodiment, the NEF entity receives the authentication request and the first parameter from the SMF entity, and then the NEF entity sends the authentication request to the third-party authentication entity based on the first parameter. A control-plane-based PDU session authentication manner is provided, so that the third-party authentication entity may be authenticated on the NEF entity. In addition, the SMF entity sends the authentication request to the third-party authentication entity by using the NEF entity connected to the SMF entity, so that the third-party authentication entity may authenticate the terminal device. Further, the terminal device and the third-party authentication entity that is in a DN are required to perform mutual authentication, and the PDU session is established only when the authentication succeeds. Then, through the foregoing authentication for establishing the PDU session, the DN can accept access by an authorized user and reject access by an unauthorized user, thereby improving security of the DN. In addition, the third-party authentication entity may notify a 5G network of an authentication result, and the 5G network may reject establishment of a PDU session for the unauthorized user, thereby saving network resources.

Optionally, in a first implementation scenario of the foregoing embodiment, when the signaling in 901 further includes an authentication parameter, the foregoing authentication request includes the authentication parameter. Steps 906 to 9012 do not need to be implemented, and step 9015 and step 9016 may be implemented. Step 9014 is performed after step 9016.

9015. The third-party authentication entity authenticates the terminal device based on the authentication parameter, and generates an authentication result, where the authentication result indicates whether the authentication between the terminal device and the third-party authentication entity succeeds.

9016. The third-party authentication entity sends the authentication result to the SMF entity by using the NEF entity, where the authentication result is carried in an authentication feedback message, and the authentication feedback message further includes a key generation parameter.

Optionally, in the first implementation scenario or a second implementation scenario of the foregoing embodiment, in step 903, the authentication request and the first parameter are carried in first signaling, and the first signaling further includes an identifier of the SMF entity. In this case, in step 905, step 905 may be implemented in the following manner: The NEF entity sends the authentication request and the identifier of the SMF entity to the third-party authentication entity; or the NEF entity converts the identifier of the SMF entity into an external identifier of the SMF entity, and sends the authentication request and the external identifier to the third-party authentication entity.

Optionally, in the first implementation scenario, the second implementation scenario, or a third implementation scenario of the foregoing embodiment, before step 903, the method may further include steps 9017 and 9018.

9017. The NEF entity receives a service registration request sent by the third-party authentication entity, where the service registration request is used to request the NEF entity to complete a service registration procedure with the third-party authentication entity.

9018. When the service registration procedure succeeds, the NEF entity generates reference information, and sends the reference information to the SMF entity or a policy control function PCF entity; or when the service registration procedure succeeds, the NEF entity sends a first message to a PCF entity, where the first message is used by the PCF entity to generate reference information and/or a dynamic policy control and charging PCC policy.

Optionally, in any implementation scenario of the foregoing embodiment, before step 905, the method may further include step 9019: The NEF entity establishes a binding relationship between the SMF entity and the third-party authentication entity.

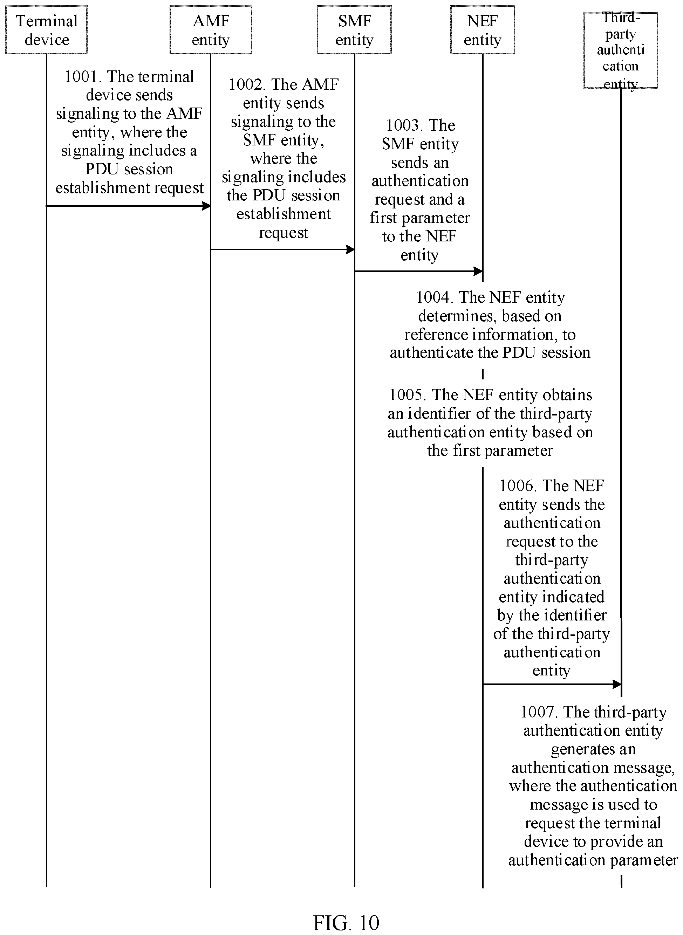

As shown in FIG. 10, an embodiment of this application provides a still yet further session processing method. The method is specifically described as follows.

1001. A terminal device sends signaling to an AMF entity, where the signaling includes a PDU session establishment request.

1002. The AMF entity sends signaling to an SMF entity, where the signaling includes the PDU session establishment request.

1003. The SMF entity sends an authentication request and a first parameter to a NEF entity.

In an example, for step 1001 to step 1003, refer to step 401. Details are not described again.

1004. The NEF entity determines, based on reference information, to authenticate the PDU session, where the reference information includes at least one of the following: a DNN, S-NSSAI, or an application identifier.

For example, step 1004 may be implemented in the following manners.

Manner 1 of step 1004: If the reference information includes a DNN in the first parameter, the NEF entity determines to authenticate the PDU session.

Manner 2 of step 1004: If the reference information includes an application identifier in the first parameter, the NEF entity determines to authenticate the PDU session.

Manner 3 of step 1004: If the reference information includes a DNN and an application identifier that are in the first parameter, the NEF entity determines to authenticate the PDU session.

Manner 4 of step 1004: If the reference information includes a DNN and S-NSSAI that are in the first parameter, the NEF entity determines to authenticate the PDU session.

1005. The NEF entity obtains an identifier of the third-party authentication entity based on the first parameter.

The first parameter includes at least one of the following: a DNN corresponding to the PDU session, S-NSSAI corresponding to the PDU session, an application identifier corresponding to the PDU session, or the identifier of the third-party authentication entity.

For example, step 1005 may be implemented in the following manners.

Manner 1 of step 1005: When the first parameter includes the DNN, the NEF entity obtains the identifier of the third-party authentication entity based on a first correspondence and the first parameter. The first correspondence is a correspondence between the DNN and the identifier of the third-party authentication entity.

Manner 2 of step 1005: When the first parameter includes the application identifier, the NEF entity obtains the identifier of the third-party authentication entity based on a second correspondence and the first parameter. The second correspondence is a correspondence between the application identifier and the identifier of the third-party authentication entity.

Manner 3 of step 1005: When the first parameter includes the DNN and the application identifier, the NEF entity obtains the identifier of the third-party authentication entity based on a third correspondence and the first parameter. The third correspondence is a correspondence among the DNN, the application identifier, and the identifier of the third-party authentication entity.

In an example, for this step, refer to step 4021. Details are not described again.

1006. The NEF entity sends the authentication request to the third-party authentication entity indicated by the identifier of the third-party authentication entity.

In an example, for this step, refer to step 4022. Details are not described again.

1007. The third-party authentication entity generates an authentication message, where the authentication message is used to request the terminal device to provide an authentication parameter.

1008. The third-party authentication entity sends the authentication message to the SMF entity by using the NEF entity.

In an example, for step 1007 and step 1008, refer to the description of step 205. Details are not described again.

1009. The SMF entity sends the authentication message to the terminal device by using the AMF entity.

In an example, for this step, refer to the description of step 206. Details are not described again.

10010. The terminal device sends the authentication parameter to the SMF entity by using the AMF entity.

In an example, for this step, refer to the description of step 207. Details are not described again.

10011. The SMF entity sends the authentication parameter to the third-party authentication entity by using the NEF entity.

In an example, for this step, refer to the description of step 207. Details are not described again.

10012. The third-party authentication entity authenticates the terminal device based on the authentication parameter, and generates an authentication result, where the authentication result indicates whether the authentication between the terminal device and the third-party authentication entity succeeds.

10013. The third-party authentication entity sends the authentication result to the SMF entity by using the NEF entity, where the authentication result is carried in an authentication feedback message, and the authentication feedback message further includes a key generation parameter.

In an example, for step 10012 and step 10013, refer to the description of step 208. Details are not described again.

10014. When the SMF entity determines that the authentication result indicates that the authentication between the terminal device and the third-party authentication entity succeeds, the SMF entity continues performing a PDU session establishment procedure between the terminal device and the third-party authentication entity.

In an example, for this step, refer to the description of step 209. Details are not described again.

After step 10013, the method further includes the following step.

10015. The SMF entity sends the key generation parameter to the terminal device, where the key generation parameter is used to establish application level security between the terminal device and the third-party authentication entity.

In an example, for this step, refer to the description of step 2010. Details are not described again. Step 10014 and step 10015 may be simultaneously performed or may not be simultaneously performed.

According to the method provided in the foregoing embodiment, the NEF entity receives the authentication request and the first parameter from the SMF entity, and then the NEF entity sends the authentication request to the third-party authentication entity based on the first parameter. A control-plane-based PDU session authentication manner is provided, so that the third-party authentication entity may be authenticated on the NEF entity. In addition, the SMF entity sends the authentication request to the third-party authentication entity by using the NEF entity connected to the SMF entity, so that the third-party authentication entity may authenticate the terminal device. Further, the terminal device and the third-party authentication entity that is in a data network (data network, DN) are required to perform mutual authentication, and the PDU session is established only when the authentication succeeds. Then, through the foregoing authentication for establishing the PDU session, the DN can accept access by an authorized user and reject access by an unauthorized user, thereby improving security of the DN. In addition, the third-party authentication entity may notify a 5G network of an authentication result, and the 5G network may reject establishment of a PDU session for the unauthorized user, thereby saving network resources.

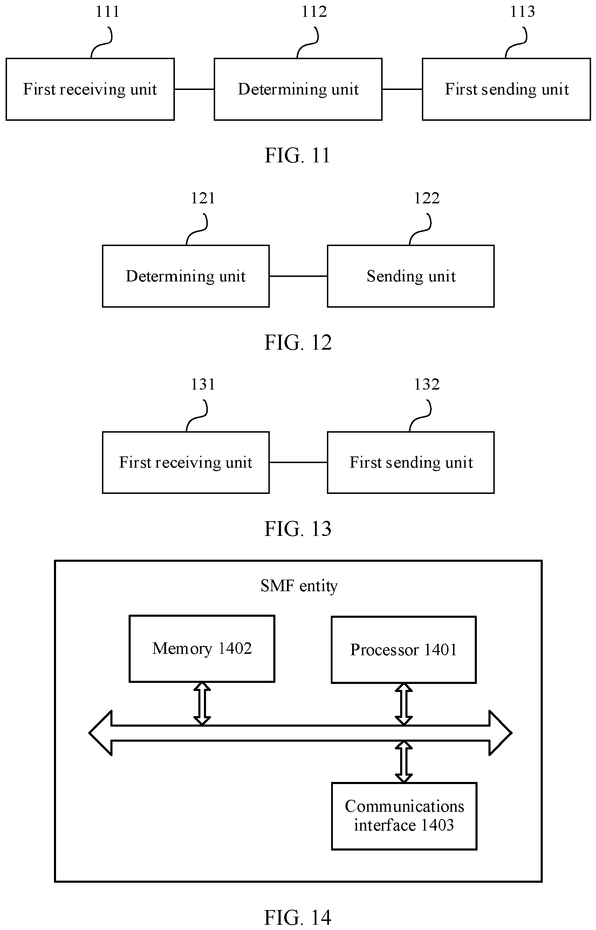

As shown in FIG. 11, an embodiment of this application provides a session processing apparatus. The session processing apparatus may be an SMF entity, may be configured to perform the actions or steps of the SMF entity in the embodiment shown in FIG. 2, or may be configured to perform the actions or steps of the SMF entity in the embodiments shown in FIG. 5A, FIG. 5B, FIG. 6A, and FIG. 6B. The session processing apparatus may include: a first receiving unit 111, a determining unit 112, and a first sending unit 113.

The first receiving unit 111 is configured to receive a PDU session establishment request, where the PDU session establishment request is used to request to establish a PDU session for a terminal device.

The determining unit 112 is configured to determine, based on reference information, to authenticate the PDU session.

The first sending unit 113 is configured to send an authentication request to a third-party authentication entity by using a NEF entity.

Further, the reference information includes at least one of the following: a data network name DNN, session management-network slice selection assistance information S-NSSAI, or an application identifier.

Further, the PDU session establishment request is carried in first signaling, and the determining unit 112 is specifically configured to:
if the first signaling further includes a DNN corresponding to the PDU session, and the reference information includes the DNN corresponding to the PDU session, determine to authenticate the PDU session; or
if the first signaling further includes an application identifier corresponding to the PDU session, and the reference information includes the application identifier corresponding to the PDU session, determine to authenticate the PDU session; or
if the first signaling further includes a DNN and an application identifier that correspond to the PDU session, and the reference information includes the DNN and the application identifier that correspond to the PDU session, determine to authenticate the PDU session; or
if the first signaling further includes a DNN and S-NSSAI that correspond to the PDU session, and the reference information includes the DNN and the S-NSSAI that correspond to the PDU session, determine to authenticate the PDU session.

Further, the first sending unit 113 includes:
an obtaining subunit 1131, configured to obtain an identifier of the third-party authentication entity based on a correspondence and the first signaling; and
a sending subunit 1132, configured to send, by using the NEF entity, the authentication request to the third-party authentication entity indicated by the identifier of the third-party authentication entity.

Further, the obtaining unit 1131 is specifically configured to:
when the first signaling includes the DNN corresponding to the PDU session, obtain the identifier of the third-party authentication entity based on the correspondence and the DNN corresponding to the PDU session, where the correspondence is a correspondence between the DNN and the identifier of the third-party authentication entity; or
when the first signaling includes the application identifier corresponding to the PDU session, obtain the identifier of the third-party authentication entity based on the correspondence and the application identifier corresponding to the PDU session, where the correspondence is a correspondence between the application identifier and the identifier of the third-party authentication entity; or
when the first signaling includes the DNN and the application identifier that correspond to the PDU session, obtain the identifier of the third-party authentication entity based on the correspondence and the DNN and the application identifier that correspond to the PDU session, where the correspondence is a correspondence among the DNN, the application identifier, and the identifier of the third-party authentication entity.

Further, the PDU session establishment request is carried in the first signaling; and
the first sending unit 113 is specifically configured to:
when the first signaling further includes a user identifier, obtain the identifier of the third-party authentication entity based on the user identifier; and
send, by using the NEF entity, the authentication request to the third-party authentication entity indicated by the identifier of the third-party authentication entity.

Further, the apparatus further includes:
a second receiving unit 114, configured to: after the first sending unit 113 sends the authentication request to the third-party authentication entity by using the NEF entity, receive an authentication message sent by the third-party authentication entity by using the NEF entity, where the authentication message is used to request the terminal device to send an authentication parameter;
a second sending unit 115, configured to send the authentication message to the terminal device;
a third receiving unit 116, configured to: receive the authentication parameter, and send the authentication parameter to the third-party authentication entity by using the NEF entity;
a fourth receiving unit 117, configured to receive an authentication result sent by the third-party authentication entity by using the NEF entity; and
a first confirming unit 118, configured to: when the authentication result indicates that the authentication between the terminal device and the third-party authentication entity succeeds, continue performing a PDU session establishment procedure.

Alternatively, the PDU session establishment request is carried in the first signaling, and the first signaling further includes an authentication parameter; and the apparatus further includes:
a fifth receiving unit 119, configured to: after the first sending unit sends the authentication request to the third-party authentication entity by using the NEF entity, receive an authentication result sent by the third-party authentication entity by using the NEF entity; and
a second confirming unit 1110, configured to: when the authentication result indicates that the authentication between the terminal device and the third-party authentication entity succeeds, continue performing a PDU session establishment procedure.

Further, the authentication result is carried in an authentication feedback message, and the authentication feedback message further includes a key generation parameter; and the apparatus further includes:
a third sending unit 1111, configured to send the key generation parameter to the terminal device, where the key generation parameter is used to establish application level security between the terminal device and the third-party authentication entity.

Further, the authentication parameter includes at least one of the following: a certificate of the terminal device, a user name or password of the terminal device, an identity verification parameter, or a security key parameter.

The identity verification parameter is used by the third-party authentication entity to verify an identity of the terminal device, and the security key parameter is used to generate a shared key between the terminal device and the third-party authentication entity.

Further, the authentication request is carried in second signaling, and the second signaling further includes a first parameter.

The first parameter includes at least one of the following: the DNN corresponding to the PDU session, the S-NSSAI corresponding to the PDU session, the application identifier corresponding to the PDU session, or the identifier of the third-party authentication entity.

Further, the apparatus further includes a configuration unit 1112 or an obtaining unit 1113.

The configuration unit 1112 is configured to: before the determining unit 112 determines, based on the reference information, to authenticate the PDU session, configure the reference information.

The obtaining unit 1113 is configured to: before the determining unit 112 determines, based on the reference information, to authenticate the PDU session, obtain the reference information from a unified data management UDM entity, a policy control function PCF entity, or the NEF entity.

According to the SMF entity provided in this embodiment, the SMF entity receives the PDU session establishment request. The PDU session establishment request is used to request to establish the PDU session for the terminal device. After determining, based on the reference information, to authenticate the PDU session, the SMF entity sends the authentication request to the third-party authentication entity by using the NEF entity. A control-plane-based PDU session authentication manner is provided, so that the third-party authentication entity may be authenticated on the SMF entity. In addition, the SMF entity sends the authentication request to the third-party authentication entity by using the NEF entity connected to the SMF entity, so that the third-party authentication entity may authenticate the terminal device. Further, the terminal device and the third-party authentication entity that is in a DN are required to perform mutual authentication, and the PDU session is established only when the authentication succeeds. Then, through the foregoing authentication for establishing the PDU session, the DN can accept access by an authorized user and reject access by an unauthorized user, thereby improving security of the DN. In addition, the third-party authentication entity may notify a 5G network of an authentication result, and the 5G network may reject establishment of a PDU session for the unauthorized user, thereby saving network resources.

As shown in FIG. 12, an embodiment of this application provides another session processing apparatus. The session processing apparatus may be a terminal device, may be configured to perform the actions or steps of the terminal device in the embodiment shown in FIG. 3, or may be configured to perform the actions or steps of the terminal device in the embodiments shown in FIG. 7A, FIG. 7B, FIG. 8A, and FIG. 8B. The session processing apparatus may include a determining unit 121 and a sending unit 122.

The determining unit 121 is configured to determine, based on reference information, to authenticate a PDU session.

The sending unit 122 is configured to send a signaling message, where the signaling message includes a PDU session establishment request and a user identifier, and the PDU session establishment request is used to request to establish the PDU session for a terminal device.

Further, the reference information includes at least one of the following: a DNN, S-NSSAI, or an application identifier.

Further, the determining unit 121 is specifically configured to:
if the reference information includes a DNN corresponding to the PDU session, determine to authenticate the PDU session; or
if the reference information includes an application identifier corresponding to the PDU session, determine to authenticate the PDU session; or
if the reference information includes a DNN and an application identifier that correspond to the PDU session, determine to authenticate the PDU session; or
if the reference information includes a DNN and S-NSSAI that correspond to the PDU session, determine to authenticate the PDU session.

Further, the first signaling further includes at least one of the following: the application identifier corresponding to the PDU session or an authentication parameter.

Further, the apparatus further includes:
a receiving unit 123, configured to: after the sending unit 122 sends the first signaling, receive a key generation parameter sent by a session management function SMF entity, where the key generation parameter is used to establish application level security of the terminal device.

According to the terminal device provided in this embodiment, the terminal device determines, based on the reference information, to authenticate the PDU session; and the terminal device sends the first signaling, where the first signaling includes the PDU session establishment request, and the first signaling further includes the user identifier. A control-plane-based PDU session authentication manner is provided, so that the third-party authentication entity may be authenticated on the terminal device. In addition, an SMF entity sends an authentication request to the third-party authentication entity by using the NEF entity connected to the SMF entity, so that the third-party authentication entity may authenticate the terminal device. Further, the terminal device and the third-party authentication entity that is in a DN are required to perform mutual authentication, and the PDU session is established only when the authentication succeeds. Then, through the foregoing authentication for establishing the PDU session, the DN can accept access by an authorized user and reject access by an unauthorized user, thereby improving security of the DN. In addition, the third-party authentication entity may notify a 5G network of an authentication result, and the 5G network may reject establishment of a PDU session for the unauthorized user, thereby saving network resources.

As shown in FIG. 13, an embodiment of this application provides still another session processing apparatus. The session processing apparatus may be a NEF entity, may be configured to perform the actions or steps of the NEF entity in the embodiment shown in FIG. 4, or may be configured to perform the actions or steps of the NEF entity in the embodiments shown in FIG. 9 and FIG. 10. The session processing apparatus may include a first receiving unit 131 and a first sending unit 132.

The first receiving unit 131 is configured to receive an authentication request and a first parameter from an SMF entity, where the authentication request is used to request to authenticate a PDU session.

The first sending unit 132 is configured to send the authentication request to a third-party authentication entity based on the first parameter.

Further, the first parameter includes at least one of the following: a DNN corresponding to the PDU session, S-NSSAI corresponding to the PDU session, an application identifier corresponding to the PDU session, or an identifier of the third-party authentication entity.

Further, the first sending unit 132 includes:
an obtaining subunit 1321, configured to obtain the identifier of the third-party authentication entity based on the first parameter; and
a sending subunit 1322, configured to send the authentication request to the third-party authentication entity indicated by the identifier of the third-party authentication entity.

Further, the obtaining unit 1321 is specifically configured to:
when the first parameter includes the DNN corresponding to the PDU session, obtain the identifier of the third-party authentication entity based on a first correspondence and the first parameter, where the first correspondence is a correspondence between the DNN and the identifier of the third-party authentication entity; or
when the first parameter includes the application identifier corresponding to the PDU session, obtain the identifier of the third-party authentication entity based on a second correspondence and the first parameter, where the second correspondence is a correspondence between the application identifier and the identifier of the third-party authentication entity; or
when the first parameter includes the DNN and the application identifier that correspond to the PDU session, obtain the identifier of the third-party authentication entity based on a third correspondence and the first parameter, where the third correspondence is a correspondence among the DNN, the application identifier, and the identifier of the third-party authentication entity.

Further, the apparatus further includes:
a determining unit 133, configured to: before the first sending unit 132 sends the authentication request to the third-party authentication entity based on the first parameter, determine, based on reference information, to authenticate the PDU session, where the reference information includes at least one of the following: a DNN, S-NSSAI, or an application identifier.

Further, the determining unit 133 is specifically configured to:
if the reference information includes the DNN, when the reference information includes the DNN in the first parameter, determine to authenticate the PDU session; or
if the reference information includes the application identifier, when the reference information includes the application identifier in the first parameter, determine to authenticate the PDU session; or
if the reference information includes the DNN and the application identifier, when the reference information includes the DNN and the application identifier that are in the first parameter, determine to authenticate the PDU session; or
if the reference information includes the DNN and the S-NSSAI, when the reference information includes the DNN and the S-NSSAI that are in the first parameter, determine to authenticate the PDU session.

Further, the authentication request and the first parameter are carried in first signaling, and the first signaling further includes an identifier of the SMF entity; and
the first sending unit 132 is specifically configured to:
send the authentication request and the identifier of the SMF entity to the third-party authentication entity; or
convert the identifier of the SMF entity into an external identifier of the SMF entity, and send the authentication request and the external identifier to the third-party authentication entity.

Further, the apparatus further includes:
a second receiving unit 134, configured to: before the first receiving unit 132 receives the authentication request and the first parameter from the SMF entity, receive a service registration request sent by the third-party authentication entity, where the service registration request is used to request the NEF entity to complete a service registration procedure with the third-party authentication entity; and
a second sending unit 134, configured to: when the service registration procedure succeeds, generate the reference information, and send the reference information to the SMF entity or a policy control function PCF entity; or when the service registration procedure succeeds, send a first message to a PCF entity, where the first message is used by the PCF entity to generate the reference information and/or a dynamic policy control and charging PCC policy.

Further, the apparatus further includes:
an establishment unit 135, configured to: before the first sending unit 132 sends the authentication request to the third-party authentication entity based on the first parameter, establish a binding relationship between the SMF entity and the third-party authentication entity.

According to the NEF entity provided in this embodiment, the NEF entity receives the authentication request and the first parameter from the SMF entity, and then the NEF entity sends the authentication request to the third-party authentication entity based on the first parameter. A control-plane-based PDU session authentication manner is provided, so that the third-party authentication entity may be authenticated on the NEF entity. In addition, the SMF entity sends the authentication request to the third-party authentication entity by using the NEF entity connected to the SMF entity, so that the third-party authentication entity may authenticate a terminal device. Further, the terminal device and the third-party authentication entity that is in a DN are required to perform mutual authentication, and the PDU session is established only when the authentication succeeds. Then, through the foregoing authentication for establishing the PDU session, the DN can accept access by an authorized user and reject access by an unauthorized user, thereby improving security of the DN. In addition, the third-party authentication entity may notify a 5G network of an authentication result, and the 5G network may reject establishment of a PDU session for the unauthorized user, thereby saving network resources.

As shown in FIG. 14, an embodiment of this application provides an SMF entity. The SMF entity may be configured to perform the actions or steps of the SMF entity in the embodiment shown in FIG. 2, or may be configured to perform the actions or steps of the SMF entity in the embodiments shown in FIG. 5A, FIG. 5B, FIG. 6A, and FIG. 6B. The SMF entity specifically includes: a processor 1401, a memory 1402, and a communications interface 1403.

The memory 1402 is configured to store a program.

The processor 1401 is configured to execute the program stored in the memory 1402, to implement the actions of the SMF entity in the embodiment shown in FIG. 2, or the actions of the SMF entity in the embodiments shown in FIG. 5A, FIG.5B, FIG. 6A, and FIG. 6B. Details are not described again.

In the embodiments of this application, reference may be made to each other for the foregoing embodiments. Same or similar steps and nouns are not described one by one again.

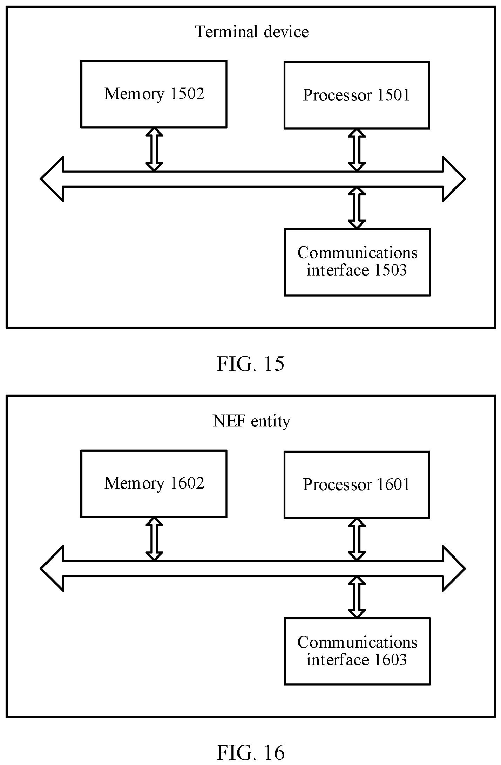

As shown in FIG. 15, an embodiment of this application provides a terminal device. The terminal device may be configured to perform the actions or steps of the terminal device in the embodiment shown in FIG. 3, or may be configured to perform the actions or steps of the terminal device in the embodiments shown in FIG. 7A, FIG. 7B, FIG. 8A, and FIG. 8B. The terminal device specifically includes: a processor 1501, a memory 1502, and a communications interface 1503.

The memory 1502 is configured to store a program.

The processor 1501 is configured to execute the program stored in the memory 1502, to implement the actions of the terminal device in the embodiment shown in FIG. 3, or the actions of the terminal device in the embodiments shown in FIG. 7A, FIG. 7B, FIG. 8A, and FIG. 8B. Details are not described again.

The communications interface 1503 may be specifically a transceiver.

In the embodiments of this application, reference may be made to each other for the foregoing embodiments. Same or similar steps and nouns are not described one by one again.

As shown in FIG. 16, an embodiment of this application provides a NEF entity. The NEF entity may be configured to perform the actions or steps of the NEF entity in the embodiment shown in FIG. 4, or may be configured to perform the actions or steps of the NEF entity in the embodiments shown in FIG. 9 and FIG. 10. The NEF entity specifically includes: a processor 1601, a memory 1602, and a communications interface 1603.

The memory 1602 is configured to store a program.

The processor 1601 is configured to execute the program stored in the memory 1602, to implement the actions of the NEF entity in the embodiment shown in FIG. 4, or the actions of the NEF entity in the embodiments shown in FIG. 9 and FIG. 10. Details are not described again.

In the embodiments of this application, reference may be made to each other for the foregoing embodiments. Same or similar steps and nouns are not described one by one again.

All or some of the foregoing embodiments may be implemented by using software, hardware, firmware, or any combination thereof. When software is used to implement the embodiments, the foregoing embodiments may be implemented completely or partially in a form of a computer program product. The computer program product includes one or more computer instructions. When the computer program instructions are loaded or executed on a computer, the procedure or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk (SSD)), or the like.

## Claims

1. A session processing method, **characterized by** comprising:
receiving (201), by a session management function, SMF, entity, a protocol data unit, PDU, session establishment request from a terminal device, wherein the PDU session establishment request is used to request to establish a PDU session for the terminal device, wherein the PDU session establishment request is carried in first signaling, and the first signaling further comprises an application identifier corresponding to the PDU session;
determining (202), by the SMF entity based on reference information, to authenticate the PDU session, and wherein the reference information comprises the application identifier corresponding to the PDU session; and
sending (203), by the SMF entity, an authentication request to a third-party authentication entity by using a network exposure function, NEF, entity that is for connecting the SMF entity to an external data network, comprising: obtaining, by the SMF entity, a user identifier of the terminal device and an identifier of the third-party authentication entity based on a correspondence and the application identifier, wherein the correspondence is between the application identifier and the identifier of the third-party authentication entity; and sending, by the SMF entity by using the NEF entity, the authentication request to the third-party authentication entity indicated by the identifier of the third-party authentication entity; and
wherein after the sending, by the SMF entity, an authentication request to the third-party authentication entity by using the NEF entity, the method further comprises:
receiving, by the SMF entity, an authentication message from the third-party authentication entity by using the NEF entity, wherein the authentication message is used to request the terminal device to send an authentication parameter, and wherein the authentication parameter includes any one of the following: a certificate of the terminal device, a user name or password of the terminal device, an identity verification parameter, or a security key parameter, wherein the identity verification parameter is used by the third-party authentication entity to verify an identity of the terminal device, and wherein the security key parameter is used to generate a shared key between the terminal device and the third-party authentication entity;
sending, by the SMF entity, the authentication message to the terminal device;
receiving, by the SMF entity, the authentication parameter from the terminal device, and sending the authentication parameter to the third-party authentication entity by using the NEF entity;
receiving, by the SMF entity, an authentication result from the third-party authentication entity by using the NEF entity; and
when the authentication result indicates that the authentication between the terminal device and the third-party authentication entity succeeds, continuing, by the SMF entity, performing the PDU session establishment procedure; and
when the authentication result indicates that the authentication between the terminal device and the third-party authentication entity does not succeed, rejecting, by the SMF entity, establishing the PDU session.

2. The method according to claim 1, wherein the reference information comprises at least one of the following: a data network name, DNN.

3. The method according to claim 1 or 2, wherein;
the determining, by the SMF entity based on reference information, to authenticate the PDU session comprises:
when the first signaling further comprises a DNN and the application identifier that correspond to the PDU session, and the reference information comprises the DNN and the application identifier that correspond to the PDU session, determining, by the SMF entity, to authenticate the PDU session.

4. The method according to claim 3, wherein the obtaining, by the SMF entity, an identifier of the third-party authentication entity based on a correspondence and the first signaling comprises:
when the first signaling comprises the DNN and the application identifier that correspond to the PDU session, obtaining, by the SMF entity, the identifier of the third-party authentication entity based on the correspondence and the DNN and the application identifier that correspond to the PDU session, wherein the correspondence is a correspondence among the DNN, the application identifier, and the identifier of the third-party authentication entity;.

5. A session management function, SMF, entity, **characterized by** comprising:
a processor (1401);
a communications interface (1403); and
a memory (1402);
wherein the processor (1401) is configured to execute a program in the memory (1402), causing the processor (1401) to perform the method according to any one of claims 1 to 4.

6. A system, **characterized by** comprising: a network exposure function, NEF, entity, and a session management function, SMF, entity; wherein
the SMF entity is configured to:
receive a protocol data unit, PDU, session establishment request from a terminal device, wherein the PDU session establishment request is used to request to establish a PDU session for the terminal device, wherein the PDU session establishment request is carried in first signaling, and the first signaling further comprises an application identifier corresponding to the PDU session;
determine to authenticate the PDU session based on reference information, and wherein the reference information comprises the application identifier corresponding to the PDU session; and
send an authentication request to a third-party authentication entity by using the network exposure function, NEF, entity that is configured to connect the SMF entity to an external data network comprising: obtaining, by the SMF entity, a user identifier of the terminal device and an identifier of the third-party authentication entity based on a correspondence and the application identifier, wherein the correspondence is between the application identifier and the identifier of the third-party authentication entity; and sending, by the SMF entity by using the NEF entity, the authentication request to the third-party authentication entity indicated by the identifier of the third-party authentication entity; and
wherein after the authentication request has been sent, by the SMF entity, to the third-party authentication entity by using the NEF entity, the SMF entity is further configured to:
receive an authentication message from the third-party authentication entity by using the NEF entity, wherein the authentication message is used to request the terminal device to send an authentication parameter, and wherein the authentication parameter includes any one of the following: a certificate of the terminal device, a user name or password of the terminal device, an identity verification parameter, or a security key parameter, wherein the identity verification parameter is used by the third-party authentication entity to verify an identity of the terminal device, and wherein the security key parameter is used to generate a shared key between the terminal device and the third-party authentication entity;
send the authentication message to the terminal device;
receive the authentication parameter from the terminal device, and send the authentication parameter to the third-party authentication entity by using the NEF entity;
receive an authentication result from the third-party authentication entity by using the NEF entity; and
when the authentication result indicates that the authentication between the terminal device and the third-party authentication entity succeeds, the SMF entity is configured to continue to perform the PDU session establishment procedure; and
when the authentication result indicates that the authentication between the terminal device and the third-party authentication entity does not succeed, the SMF entity is configured to reject the establishment of the PDU session.

7. A computer program product comprising a program stored in a computer-readable storage medium, wherein the program makes a computer execute the method of any one of claims 1 to 4.

## Patentansprüche

1. Sitzungsverarbeitungsverfahren, **dadurch gekennzeichnet, dass** es Folgendes umfasst:
Empfangen (201), durch eine Sitzungsverwaltungsfunktions(session management function - SMF)-Entität, einer Protokolldateneinheits(protocol data unit - PDU)-Sitzungsaufbauanforderung von einem Endgerät,
wobei die PDU-Sitzungsaufbauanforderung verwendet wird, um anzufordern, eine PDU-Sitzung für das Endgerät aufzubauen, wobei die PDU-Sitzungsaufbauanforderung in einer ersten Signalisierung übertragen wird und die erste Signalisierung ferner einen Anwendungsbezeichner umfasst, der der PDU-Sitzung entspricht;
Bestimmen (202), durch die SMF-Entität basierend auf Referenzinformationen, die PDU-Sitzung zu authentifizieren, und wobei die Referenzinformationen den Anwendungsbezeichner umfassen, der der PDU-Sitzung entspricht; und
Senden (203), durch die SMF-Entität, einer Authentifizierungsanforderung an eine Authentifizierungsentität eines Drittanbieters durch Verwenden einer Network-Exposure-Function(NEF)-Entität, die zum Verbinden der SMF-Entität mit einem externen Datennetzwerk dient, das Folgendes umfasst: Erhalten, durch die SMF-Entität, eines Benutzerbezeichners des Endgeräts und eines Bezeichners der Authentifizierungsentität des Drittanbieters basierend auf einer Entsprechung und dem Anwendungsbezeichner, wobei die Entsprechung zwischen dem Anwendungsbezeichner und dem Bezeichner der Authentifizierungsentität des Drittanbieters besteht; und Senden, durch die SMF-Entität durch Verwenden der NEF-Entität, der Authentifizierungsanforderung an die Authentifizierungsentität des Drittanbieters, die durch den Bezeichner der Authentifizierungsentität des Drittanbieters angezeigt wird; und
wobei nach dem Senden, durch die SMF-Entität, einer Authentifizierungsanforderung an die Authentifizierungsentität des Drittanbieters durch Verwenden der NEF-Entität das Verfahren ferner Folgendes umfasst:
Empfangen, durch die SMF-Entität, einer Authentifizierungsnachricht von der Authentifizierungsentität des Drittanbieters durch Verwenden der NEF-Entität, wobei die Authentifizierungsnachricht verwendet wird, um das Endgerät anzufordern, einen Authentifizierungsparameter zu senden, und wobei der Authentifizierungsparameter Folgendes einschließt: ein Zertifikat des Endgeräts, einen Benutzernamen oder ein Passwort des Endgeräts, einen Identitätsverifizierungsparameter oder einen Sicherheitsschlüsselparameter, wobei der Identitätsverifizierungsparameter durch die Authentifizierungsentität des Drittanbieters verwendet wird, um eine Identität des Endgeräts zu verifizieren, und wobei der Sicherheitsschlüsselparameter verwendet wird, um einen gemeinsam genutzten Schlüssel zwischen dem Endgerät und der Authentifizierungsentität des Drittanbieters zu erzeugen;
Senden, durch die SMF-Entität, der Authentifizierungsnachricht an das Endgerät;
Empfangen, durch die SMF-Entität, des Authentifizierungsparameters von dem Endgerät und Senden des Authentifizierungsparameters an die Authentifizierungsentität des Drittanbieters durch Verwenden der NEF-Entität;
Empfangen, durch die SMF-Entität, eines Authentifizierungsergebnisses von der Authentifizierungsentität des Drittanbieters durch Verwenden der NEF-Entität; und
wenn das Authentifizierungsergebnis anzeigt, dass die Authentifizierung zwischen dem Endgerät und der Authentifizierungsentität des Drittanbieters erfolgreich ist, Fortfahren, durch die SMF-Entität, des Durchführens des PDU-Sitzungsaufbauvorgangs; und
wenn das Authentifizierungsergebnis anzeigt, dass die Authentifizierung zwischen dem Endgerät und der Authentifizierungsentität des Drittanbieters nicht erfolgreich ist, Ablehnen, durch die SMF-Entität, des Aufbauens der PDU-Sitzung.

2. Verfahren nach Anspruch 1, wobei die Referenzinformationen Folgendes umfassen:
einen Datennetzwerknamen (DNN).

3. Verfahren nach Anspruch 1 oder 2, wobei
das Bestimmen, durch die SMF-Entität basierend auf Referenzinformationen, um die PDU-Sitzung zu authentifizieren, Folgendes umfasst:
wenn die erste Signalisierung ferner einen DNN und den Anwendungsbezeichner umfasst, die der PDU-Sitzung entsprechen, und die Referenzinformationen den DNN und den Anwendungsbezeichner umfassen, die der PDU-Sitzung entsprechen, Bestimmen, durch die SMF-Entität, die PDU-Sitzung zu authentifizieren.

4. Verfahren nach Anspruch 3, wobei das Erhalten, durch die SMF-Entität, eines Bezeichners der Authentifizierungsentität des Drittanbieters basierend auf einer Entsprechung und der ersten Signalisierung Folgendes umfasst:
wenn die erste Signalisierung den DNN und den Anwendungsbezeichner umfasst, die der PDU-Sitzung entsprechen, Erhalten, durch die SMF-Entität, des Bezeichners der Authentifizierungsentität des Drittanbieters basierend auf der Entsprechung und dem DNN und dem Anwendungsbezeichner, die der PDU-Sitzung entsprechen, wobei die Entsprechung eine Entsprechung zwischen dem DNN, dem Anwendungsbezeichner und dem Bezeichner der Authentifizierungsentität des Drittanbieters ist.

5. Sitzungsverwaltungsfunktions-(SMF)-Entität, **dadurch gekennzeichnet, dass** sie Folgendes umfasst:
einen Prozessor (1401);
eine Kommunikationsschnittstelle (1403); und
einen Speicher (1402);
wobei der Prozessor (1401) konfiguriert ist, um ein Programm in dem Speicher (1402) auszuführen, was den Prozessor (1401) veranlasst, das Verfahren nach einem der Ansprüche 1 bis 4 durchzuführen.

6. System, **dadurch gekennzeichnet, dass** es Folgendes umfasst: eine Network-Exposure-Function(NEF)-Entität und eine Sitzungsverwaltungsfunktions(SMF)-Entität; wobei
die SMF-Entität für Folgendes konfiguriert ist:
Empfangen einer Protokolldateneinheits(PDU)-Sitzungsaufbauanforderung von einem Endgerät, wobei die PDU-Sitzungsaufbauanforderung verwendet wird, um anzufordern, eine PDU-Sitzung für das Endgerät aufzubauen, wobei die PDU-Sitzungsaufbauanforderung in einer ersten Signalisierung übertragen wird und die erste Signalisierung ferner einen Anwendungsbezeichner umfasst, der der PDU-Sitzung entspricht;
Bestimmen, basierend auf Referenzinformationen, die PDU-Sitzung zu authentifizieren und wobei die Referenzinformationen den Anwendungsbezeichner umfassen, der der PDU-Sitzung entspricht; und
Senden einer Authentifizierungsanforderung an eine Authentifizierungsentität eines Drittanbieters durch Verwenden der Network-Exposure-Function(NEF)-Entität, die konfiguriert ist, um die SMF-Entität mit einem externen Datennetzwerk zu verbinden, das Folgendes umfasst: Erhalten, durch die SMF-Entität, eines Benutzerbezeichners des Endgeräts und eines Bezeichners der Authentifizierungsentität des Drittanbieters basierend auf einer Entsprechung und dem Anwendungsbezeichner, wobei die Entsprechung zwischen dem Anwendungsbezeichner und dem Bezeichner der Authentifizierungsentität des Drittanbieters besteht; und Senden, durch die SMF-Entität durch Verwenden der NEF-Entität, der Authentifizierungsanforderung an die Authentifizierungsentität des Drittanbieters, die durch den Bezeichner der Authentifizierungsentität des Drittanbieters angezeigt wird; und
wobei, nachdem die Authentifizierungsanforderung durch die SMF-Entität an die Authentifizierungsentität des Drittanbieters durch Verwenden der NEF-Entität gesendet worden ist, die SMF-Entität ferner für Folgendes konfiguriert ist:
Empfangen einer Authentifizierungsnachricht von der Authentifizierungsentität des Drittanbieters durch Verwenden der NEF-Entität, wobei die Authentifizierungsnachricht verwendet wird, um das Endgerät anzufordern, einen Authentifizierungsparameter zu senden, und wobei der Authentifizierungsparameter Folgendes einschließt: ein Zertifikat des Endgeräts, einen Benutzernamen oder das Passwort des Endgeräts, einen Identitätsverifizierungsparameter oder einen Sicherheitsschlüsselparameter, wobei der Identitätsverifizierungsparameter durch die Authentifizierungsentität des Drittanbieters verwendet wird, um eine Identität des Endgeräts zu verifizieren, und wobei der Sicherheitsschlüsselparameter verwendet wird, um einen gemeinsam genutzten Schlüssel zwischen dem Endgerät und der Authentifizierungsentität des Drittanbieters zu erzeugen;
Senden der Authentifizierungsnachricht an das Endgerät;
Empfangen des Authentifizierungsparameters von dem Endgerät und Senden des Authentifizierungsparameters an die Authentifizierungsentität des Drittanbieters durch Verwenden der NEF-Entität;
Empfangen eines Authentifizierungsergebnisses von der Authentifizierungsentität des Drittanbieters durch Verwenden der NEF-Einheit; und
wenn das Authentifizierungsergebnis anzeigt, dass die Authentifizierung zwischen dem Endgerät und der Authentifizierungsentität des Drittanbieters erfolgreich ist, die SMF-Entität konfiguriert ist, um fortzufahren, den PDU-Sitzungsaufbauvorgang durchzuführen; und
wenn das Authentifizierungsergebnis anzeigt, dass die Authentifizierung zwischen dem Endgerät und der Authentifizierungsentität des Drittanbieters nicht erfolgreich ist, die SMF-Entität konfiguriert ist, um den Aufbau der PDU-Sitzung abzulehnen.

7. Computerprogrammprodukt, das ein in einem computerlesbaren Speichermedium gespeichertes Programm umfasst, wobei das Programm bewirkt, dass ein Computer das Verfahren nach einem der Ansprüche 1 bis 4 ausführt.

## Revendications

1. Procédé de traitement de session, **caractérisé en ce qu'**il comprend :
la réception (201), par une entité de fonction de gestion de session, SMF, d'une demande d'établissement de session d'unité de données de protocole, PDU, à partir d'un dispositif terminal,
dans lequel la demande d'établissement de session PDU est utilisée pour demander l'établissement d'une session PDU pour le dispositif terminal, la demande d'établissement de session PDU étant transportée dans la première signalisation, et la première signalisation comprenant en outre un identifiant d'application correspondant à la session PDU ;
la détermination (202), par l'entité SMF sur la base d'informations de référence, d'authentifier la session PDU, et dans lequel les informations de référence comprennent l'identifiant d'application correspondant à la session PDU ; et
l'envoi (203), par l'entité SMF, d'une demande d'authentification à une entité d'authentification tierce à l'aide d'une entité de fonction d'exposition de réseau, NEF, qui est destinée à connecter l'entité SMF à un réseau de données externe, comprenant : l'obtention, par l'entiré SMF, d'un identifiant d'utilisateur du dispositif terminal et un identifiant de l'entité d'authentification tierce sur la base d'une correspondance et de l'identifiant d'application, la correspondance se trouvant entre l'identifiant d'application et l'identifiant de l'entité d'authentification tierce ; et l'envoi, par l'entité SMF à l'aide de l'entité NEF, de la demande d'authentification à l'entité d'authentification tierce indiquée par l'identifiant de l'entité d'authentification tierce ; et
dans lequel après l'envoi, par l'entité SMF, d'une demande d'authentification à l'entité d'authentification tierce à l'aide de l'entité NEF, le procédé comprend en outre :
la réception, par l'entité SMF, d'un message d'authentification de l'entité d'authentification tierce à l'aide de l'entité NEF, le message d'authentification étant utilisé pour demander au dispositif terminal d'envoyer un paramètre d'authentification, et le paramètre d'authentification comportant l'un quelconque des éléments suivants : un certificat du dispositif terminal, un nom d'utilisateur ou un mot de passe du dispositif terminal, un paramètre de vérification d'identité ou un paramètre de clé de sécurité, le paramètre de vérification d'identité étant utilisé par l'entité d'authentification tierce pour vérifier une identité du dispositif terminal, et le paramètre de clé de sécurité étant utilisé pour générer une clé partagée entre le dispositif terminal et l'entité d'authentification tierce ;
l'envoi, par l'entité SMF, du message d'authentification au dispositif terminal ;
la réception, par l'entité SMF, du paramètre d'authentification à partir du dispositif terminal, et
l'envoi du paramètre d'authentification à l'entité d'authentification tierce à l'aide de l'entité NEF ;
la réception, par l'entité SMF, d'un résultat d'authentification à partir de l'entité d'authentification tierce à l'aide de l'entité NEF ; et
lorsque le résultat d'authentification indique que l'authentification entre le dispositif terminal et l'entité d'authentification tierce est un succès, la poursuite, par l'entité SMF, de la réalisation de la procédure d'établissement de session PDU ; et
lorsque le résultat d'authentification indique que l'authentification entre le dispositif terminal et l'entité d'authentification tierce est un échec, le rejet, par l'entité SMF, de l'établissement de la session PDU.

2. Procédé selon la revendication 1, selon lequel les informations de référence comprennent au moins un des éléments suivants : un nom de réseau de données, DNN.

3. Procédé selon la revendication 1 ou 2, dans lequel ;
la détermination, par l'entité SMF sur la base d'informations de référence, d'authentifier la session PDU comprend :
lorsque la première signalisation comprend en outre un DNN et l'identifiant d'application correspondant à la session PDU, et lorsque les informations de référence comprennent le DNN et l'identifiant d'application correspondant à la session PDU, la détermination, par l'entité SMF, d'authentifier la session PDU.

4. Procédé selon la revendication 3, dans lequel l'obtention, par l'entité SMF, d'un identifiant de l'entité d'authentification tierce sur la base d'une correspondance et de la première signalisation comprend :
lorsque la première signalisation comprend le DNN et l'identifiant d'application correspondant à la session PDU, l'obtention, par l'entité SMF, de l'identifiant de l'entité d'authentification tierce en fonction de la correspondance et du DNN et de l'identifiant d'application correspondant à la session PDU, la correspondance étant une correspondance entre le DNN, l'identifiant d'application et l'identifiant de l'entité d'authentification tierce.

5. Entité de fonction de gestion de session, SMF, **caractérisée en ce qu'**elle comprend :
un processeur (1401) ;
une interface de communication (1403) ; et
une mémoire (1402) ;
dans lequel le processeur (1401) est configuré pour exécuter un programme dans la mémoire (1402), amenant le processeur (1401) à exécuter le procédé selon l'une quelconque des revendications 1 à 4.

6. Système, **caractérisé en ce qu'**il comprend : une entité de fonction d'exposition de réseau, NEF, et une entité de fonction de gestion de session, SMF ; dans lequel
l'entité SMF est configurée pour :
recevoir une demande d'établissement de session d'unité de données de protocole, PDU, à partir d'un dispositif terminal, la demande d'établissement de session PDU étant utilisée pour demander l'établissement d'une session PDU pour le dispositif terminal, la demande d'établissement de session PDU étant transportée dans la première signalisation, et la première signalisation comprenant en outre un identifiant d'application correspondant à la session PDU ;
déterminer le fait d'authentifier la session PDU sur la base d'informations de référence, et dans lequel les informations de référence comprennent l'identifiant d'application correspondant à la session PDU ; et
envoyer une demande d'authentification à une entité d'authentification tierce à l'aide de l'entité de fonction d'exposition de réseau, NEF, qui est configurée pour connecter l'entité SMF à un réseau de données externe comprenant : l'obtention, par l'entité SMF, d'un identifiant d'utilisateur du dispositif terminal et un identifiant de l'entité d'authentification tierce sur la base d'une correspondance et de l'identifiant d'application, la correspondance se faisant entre l'identifiant d'application et l'identifiant de l'entité d'authentification tierce ; et l'envoi, par l'entité SMF à l'aide de l'entité NEF, de la demande d'authentification à l'entité d'authentification tierce indiquée par l'identifiant de l'entité d'authentification tierce ; et
dans lequel après que la demande d'authentification a été envoyée, par l'entité SMF, à l'entité d'authentification tierce à l'aide de l'entité NEF, l'entité SMF est en outre configurée pour :
recevoir un message d'authentification de l'entité d'authentification tierce à l'aide de l'entité NEF, le message d'authentification étant utilisé pour demander au dispositif terminal d'envoyer un paramètre d'authentification, et le paramètre d'authentification comportant l'un quelconque des éléments suivants : un certificat du dispositif terminal, un nom d'utilisateur ou un mot de passe du dispositif terminal, un paramètre de vérification d'identité ou un paramètre de clé de sécurité, le paramètre de vérification d'identité étant utilisé par l'entité d'authentification tierce pour vérifier une identité du dispositif terminal, et le paramètre de clé de sécurité étant utilisé pour générer une clé partagée entre le dispositif terminal et l'entité d'authentification tierce ;
envoyer le message d'authentification au dispositif terminal ;
recevoir le paramètre d'authentification du dispositif terminal et envoyer le paramètre d'authentification à l'entité d'authentification tierce à l'aide de l'entité NEF ;
recevoir un résultat d'authentification de l'entité d'authentification tierce à l'aide de l'entité NEF ; et
lorsque le résultat d'authentification indique que l'authentification entre le dispositif terminal et l'entité d'authentification tierce est un succès, l'entité SMF est configurée pour continuer à effectuer la procédure d'établissement de session PDU ; et
lorsque le résultat d'authentification indique que l'authentification entre le dispositif terminal et l'entité d'authentification tierce est un échec, l'entité SMF est configurée pour rejeter l'établissement de la session PDU.

7. Produit-programme informatique comprenant un programme stocké dans un support de stockage lisible par ordinateur,
dans lequel le programme amène un ordinateur à exécuter le procédé selon l'une quelconque des revendications 1 à 4.
